(19) Europäisches Patentamt
European Patent Office
Office européen des brevets

(11) EP 3 141 869 A1

(12) EUROPÄISCHE PATENTANMELDUNG

(43) Veröffentlichungstag:
**15.03.2017 Patentblatt 2017/11**

(51) Int Cl.:
***G01D 5/20*** $^{(2006.01)}$ ***G01D 5/243*** $^{(2006.01)}$

(21) Anmeldenummer: **15002662.3**

(22) Anmeldetag: **11.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Hochschule für angewandte Wissenschaften Mannheim**
**68163 Mannheim (DE)**

(72) Erfinder: **Voigt, Burkhard**
**68163 Mannheim (DE)**

(74) Vertreter: **Müller-Boré & Partner Patentanwälte PartG mbB**
**Friedenheimer Brücke 21**
**80639 München (DE)**

# (54) PHASENBASIERTE POSITIONSDETEKTION ÜBER ABSCHLUSSBLINDWIDERSTÄNDE

(57) Die Erfindung betrifft ein Verfahren zur Positionsbestimmung sowie eine Vorrichtung zur Positionsbestimmung (10). Die Vorrichtung umfasst dabei in einer Implementierung:
- zumindest ein Empfangsmodul (12) mit zumindest einer ersten und einer zweiten Längsleiterkomponente (14a, 14b), die sich entlang einer Längserstreckung (x) des Empfangsmoduls (12) von einem ersten Endabschnitt (18a) des Empfangsmoduls (12) zu einem zweiten Endabschnitt (18b) des Empfangsmoduls (12) erstrecken; einer Vielzahl von elektrisch leitenden Querverbindungen (16), welche an einer Vielzahl von Positionen ($x_i$) entlang der Längserstreckung (x) des Empfangsmoduls (12) die erste und die zweite Längsleiterkomponente (14a, 14b) elektrisch leitend miteinander verbinden, wobei jede Querverbindung (16) einen vorbestimmten elektrischen Wirkwiderstandswert (R) aufweist; und zumindest eine erste elektrisch leitende Endverbindung (19a), welche am ersten Endabschnitt (18a) die erste Längsleiterkomponente (14a) und die zweite Längsleiterkomponente (14b) miteinander verbindet, wobei die erste Endverbindung (19a) einen vorbestimmten ersten elektrischen Blindwiderstandswert ($X_1$) aufweist;
- ein entlang der Längserstreckung (x) relativ zum Empfangsmodul (12) bewegbares Sendeelement (20), welches ausgelegt ist, im Empfangsmodul einen periodischen elektrischen Stromfluss ($I_{ind}$) und/oder eine periodische elektrische Spannung ($U_{ind}$) zu induzieren;
- eine Auswerteeinrichtung, welche ausgelegt ist, ein erstes periodisches Signal ($U_1$) am ersten Endabschnitt zu erfassen und abhängig von einer von einer Position (p) des Sendeelements (20) entlang der Längserstreckung (x) des Empfangsmoduls (12) abhängigen Phasenverschiebung zwischen dem ersten periodischen Signal ($U_1$) und einem periodischen Referenzsignal die Position (p) des Sendeelements (20) entlang der Längserstreckung (x) des Empfangsmoduls (12) zu bestimmen.

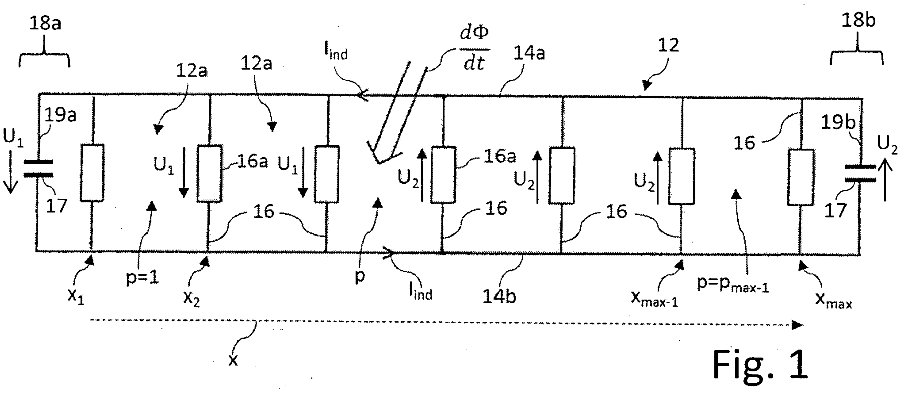


Fig. 1

EP 3 141 869 A1

## Beschreibung

Die vorliegende Erfindung betrifft eine Vorrichtung und ein Verfahren zur Positionsbestimmung und insbesondere zur kontaktlosen Positions-, Winkel- und/oder Bewegungsmessung.

Derzeit übliche Positions- oder Wegsensoren arbeiten beispielsweise mit Bändern, in die kleine Dauermagnete implementiert sind. Die Position dieser kleinen Magnete wird über magnetfeldabhängige Widerstände erfasst. Die aktuelle Position bzw. Lage zwischen den Magneten und den magnetfeldabhängigen Widerständen wird ausgezählt, d.h. die Anzahl der Magnete, die von den Widerständen passiert wurde, wird detektiert und damit die Position der Widerstände relativ zu den Magneten ermittelt. Zur Verbesserung der räumlichen Auflösung wird oft eine analoge Zwischeninterpolation vorgenommen. Für eine sichere Funktion müssen die magnetfeldabhängigen Widerstände nah am Magnetband positioniert sein.

US 4,007,454 offenbart eine Vorrichtung zur Fernerfassung von Winkelpositionen, -geschwindigkeiten und/oder Rotationsrichtungen von Objekten. Dabei wird ein rotierendes elektrisches Feld in der Nähe eines rotierenden Elements erzeugt, wobei die Rotationsachsen des elektrischen Feldes und des rotierenden Elements übereinstimmen. In dieser Rotationsachse ist ein Sensor für das elektrische Feld positioniert, um Änderungen des elektrischen Feldes zu detektieren, wenn dieses das rotierende Element passiert. Der Sensor erzeugt ein elektrisches Ausgangssignal, dessen relative Phase von der Winkelposition des rotierenden Elements abhängt. Das rotierende elektrische Feld wird dabei durch sechs auf einem Kreis angeordnete Elektroden erzeugt, die nacheinander periodisch mit elektrischen Signalen aus einem Phasen-Splitter versorgt werden.

Ferner sind aus DE 10 2006 012 952 Vorrichtungen zur Positionsbestimmung bekannt, mit denen die relative Position eines Sensorelements zu einem Verzögerungsnetzwerks durch die Phasenverschiebung eines im Sensorelement induzierten Spannungssignals zu einem Referenzsignal gemessen wird.

Aufgabe der vorliegenden Erfindung ist es, eine Vorrichtung und ein Verfahren zur einfacheren und kostengünstigeren Positionsbestimmung mit einem hohen Auflösungsvermögen und großer Messzuverlässigkeit bereitzustellen. Diese Aufgabe wird durch eine Vorrichtung mit den Merkmalen nach Anspruch 1 und durch ein Verfahren gemäß Anspruch 12 gelöst. Bevorzugte Ausführungsformen sind Gegenstand der abhängigen Ansprüche.

In einem Aspekt betrifft die Erfindung somit eine Vorrichtung zur Positionsbestimmung, umfassend:

- zumindest ein Empfangsmodul mit

  -- zumindest einer ersten und einer zweiten Längsleiterkomponente, die sich entlang einer Längserstreckung x des Empfangsmoduls von einem ersten Endabschnitt des Empfangsmoduls zu einem zweiten Endabschnitt des Empfangsmoduls erstrecken;

  -- einer Vielzahl von elektrisch leitenden Querverbindungen, welche an einer Vielzahl von Positionen $x_i$ entlang der Längserstreckung x des Empfangsmoduls die erste und die zweite Längsleiterkomponente elektrisch leitend miteinander verbinden, wobei jede Querverbindung einen vorbestimmten elektrischen Wirkwiderstandswert R aufweist;

  -- eine erste elektrisch leitende Endverbindung, welche am ersten Endabschnitt die erste Längsleiterkomponente und die zweite Längsleiterkomponente miteinander verbindet, wobei die erste Endverbindung einen vorbestimmten ersten elektrischen Blindwiderstandswert $X_1$ aufweist;

- ein entlang der Längserstreckung x relativ zum Empfangsmodul bewegbares Sendeelement, welches ausgelegt ist, im Empfangsmodul einen periodischen elektrischen Stromfluss $I_{ind}$ und/oder eine periodische elektrische Spannung $U_{ind}$ zu induzieren;
- eine Auswerteeinrichtung, welche ausgelegt ist, ein erstes periodisches Signal (z.B. Spannungssignal und/oder Stromsignal) am ersten Endabschnitt zu erfassen und abhängig von einer von einer Position p des Sendeelements entlang der Längserstreckung x des Empfangsmoduls abhängigen Phasenverschiebung zwischen dem ersten periodischen Signal und einem periodischen Referenzsignal die Position p des Sendeelements entlang der Längserstreckung x des Empfangsmoduls zu bestimmen.

In analoger Weise kann die Rolle der elektrisch leitenden Querverbindungen und der Endverbindung auch vertauscht werden, so dass jede der Querverbindungen anstelle der vorbestimmten elektrischen Wirkwiderstandswerts R einen vorbestimmten elektrischen Blindwiderstandswert X aufweist, während andererseits die erste elektrisch leitende Endverbindung anstelle des ersten elektrischen Blindwiderstandswertes $X_1$ einen ersten elektrischen Wirkwiderstandswert $R_1$ aufweist.

Insbesondere ist das Sendeelement dabei ausgelegt, ein periodisches Magnetfeld zu erzeugen, welches den periodischen, elektrischen Stromfluss bzw. die periodische, elektrische Spannung in den Längsleiterkomponenten des Empfangsmoduls bewirkt. Durch die Kombination aus Wirkwiderständen in den Querverbindungen und dem Blindwiderstand in der Endverbindung oder umgekehrt hängt die Phasenlage eines ersten periodischen elektrischen Spannungs- oder Stromsignals zwischen den Längsleiterkomponenten am ersten Endabschnitt als ein erstes periodisches Signal relativ zur Phasenlage des Magnetfeldes von der Position des Sendelements relativ zum ersten Endabschnitt ab. Durch die Erfassung einer entsprechenden relativen Phasenlage des ersten periodischen Signals lässt sich also diese Position ermitteln.

Als periodisches Referenzsignal kann dabei insbesondere ein periodisches elektrisches Signal dienen, welches eine bekannte, feste Phasenlage (Referenzphase) relativ zu dem vom Sendelement erzeugten Magnetfeld hat. In einer weiteren bevorzugten Ausführungsform kann als Referenzsignal ein zweites periodisches Signal dienen, welches die Auswerteeinrichtung am zweiten Endabschnitt erfasst. Dabei ist die Auswerteeinrichtung also vorzugsweise ausgelegt ist, das zweites periodisches Signal (z.B. zweites Spannungssignal oder zweites Stromsignal) am zweiten Endabschnitt zu erfassen und abhängig von einer Phasendifferenz zwischen dem ersten periodischen Signal und dem zweiten periodischen Signal die Position p des Sendeelements entlang der Längserstreckung x des Empfangsmoduls zu bestimmen. Besonders bevorzugt umfasst das Empfangsmodul dabei außerdem eine zweite elektrisch leitende Endverbindung, welche am zweiten Endabschnitt die erste Längsleiterkomponente und die zweite Längsleiterkomponente miteinander verbindet. Insbesondere im Fall von vorbestimmten elektrischen Wirkwiderstandswerten R in den Querverbindungen und dem ersten elektrischen Blindwiderstandswert $X_1$ in der ersten Endverbindung weist die zweite Endverbindung vorzugsweise einen vorbestimmten zweiten elektrischen Blindwiderstandswert $X_2$ auf. Analog weist vorzugsweise im Fall von vorbestimmten elektrischen Blindwiderstandswerten X in den Querverbindungen und dem ersten elektrischen Wirkwiderstandswert $R_1$ in der ersten Endverbindung die zweite Endverbindung einen vorbestimmten zweiten elektrischen Wirkwiderstandswert $R_2$ auf.

Insbesondere hängt dabei die Phasenlage $\varphi_1$ bzw. $\varphi_2$ beispielsweise einer für die Positionsbestimmung herangezogenen Spannung $U_1$ und/oder $U_2$ relativ zu einer Referenzphasenlage einer Referenzspannung von der Position des Sensorelements entlang der Längserstreckung ab. Über die durch die Sensoreinrichtung ermittelte Phasenlage $\varphi_1$ und/oder $\varphi_2$ der ermittelten elektrischen Spannung relativ zu dem Referenzphasenwert der Referenzspannung lässt sich die Position des Sensorelements relativ zum Sendemodul, insbesondere relativ zu dessen Endabschnitten bestimmen. Insbesondere ist dabei die Referenzspannung auch eine periodisch oszillierende Wechselspannung.

Die ermittelte elektrische Spannung bzw. die ermittelte Phasenlage $\varphi_1$ und/oder $\varphi_2$ ist dabei von der Position p des Sensorelements entlang der Längserstreckung abhängig. Über die ermittelte Phasenlage $\varphi_1$ bzw. $\varphi_2$ der Spannung an den Endabschnitten relativ zu einem periodischen Referenzsignal lässt sich somit die Position des Sensorelements entlang der Längserstreckung x des Empfangsmoduls, insbesondere relativ zu dessen Endabschnitten bestimmen oder beispielsweise dessen Mittelpunkt bestimmen.

Beispielsweise kann die Spannung $U_2$ als Referenzspannung für die Spannung $U_1$ dienen oder umgekehrt. In diesem Falle wäre sodann die Phasenlage $\varphi_2$ die Referenzphase zur Phasenlage $\varphi_1$ oder umgekehrt. In anderen Worten kann die Position p des Sendelements entlang der Längserstreckung x in Abhängigkeit eines Unterschieds bzw. einer Differenz zwischen den Phasenlagen $\varphi_1$ und $\varphi_2$ bestimmt werden.

Dabei ist die erfindungsgemäße Positionsbestimmung nicht auf die Detektion und Auswertung von Signalintensitäten angewiesen. Insbesondere ist die erfindungsgemäße Positionsbestimmung nicht auf eine Auswertung der Amplitude der Spannung $U_1$ und/oder der Spannung $U_2$ angewiesen. Anstelle dessen basiert die Positionsbestimmung auf der Ermittlung relativer Phasenlagen der Spannungen $U_1$ und/oder $U_2$ zueinander und/oder zu einer Referenzphase, vorzugsweise im Wesentlichen unabhängig von deren Intensität. Damit erreicht die Erfindung eine hohe Störungsunempfindlichkeit bzw. Störfestigkeit und ein hohes Auflösungsvermögen mit vergleichsweise einfachen Mitteln. Insbesondere kann das Sendemodul vergleichsweise einfach aufgebaut sein.

Aufgrund der hohen Empfindlichkeit der erfindungsgemäßen Phasenauswertung kann eine sehr genaue Positionsbestimmung bereits mit sehr niedrigen elektrischen Feldstärken und somit bei überraschend geringem Energieverbrauch erreicht werden. Ferner hat die erfindungsgemäße Positionsbestimmung den Vorteil, dass beabsichtigte und/oder unbeabsichtigte Änderungen eines Abstands zwischen dem Sendelement und dem Empfangsmodul im Wesentlichen keinen Einfluss auf die Positionsbestimmung haben, da dies im Wesentlichen keinen Einfluss auf die Phasenlage $\varphi_1$ und/oder $\varphi_2$ hat. Während die Amplituden der Spannung $U_1$ und/oder $U_2$ bei einem größeren Abstand des Sendeelements zu dem Empfangsmodul kleiner werden können, hat dies im Wesentlichen keinen Einfluss auf die Phasenlagen $\varphi_1$ und $\varphi_2$. Im Wesentlichen keinen Einfluss bedeutet dabei, dass typischerweise zu erwartende kleine Abweichungen des Abstands zwischen dem Sendeelement und dem Empfangsmodul keine Reduktion der Messgenauigkeit verursachen, die eine Positionsbestimmung unmöglich machen würden.

Die elektrische Spannung $U_1$ und die elektrische Spannung $U_2$ an dem ersten Endabschnitt bzw. an dem zweiten Endabschnitt des Empfangsmoduls wird dabei maßgeblich durch die Induktion eines Stromflusses $I_{ind}$ bzw. einer Spannung $U_{ind}$ in den Längsleiterkomponenten und in den Querverbindungen des Empfangsmoduls bestimmt. Der Wert des Spannungswertes $U_1$ am ersten Endabschnitt des Empfangsmoduls sowie die Phasenlage $\varphi_1$ relativ zu einer Phasenlage $\varphi_{ind}$ der induzierten Spannung $U_{ind}$ hängt dabei insbesondere von der Entfernung des Sendelements vom ersten Endabschnitt entlang der Längserstreckung x des Empfangsmoduls ab. Insbesondere hängt der gemessene

Spannungswert $U_1$ sowie die erste Phasenlage $\varphi_1$ relativ zu einer Phasenlage $\varphi_{ind}$ der induzierten Spannung $U_{ind}$ von der Anzahl der elektrisch leitenden Querverbindungen mit vorbestimmten Widerständen ab, welche sich zwischen dem ersten Endabschnitt und der Position des Sendeelements entlang der Längserstreckung *x* befinden. Der Wert des Spannungswertes $U_2$ am zweiten Endabschnitt des Empfangsmoduls sowie die zweite Phasenlage $\varphi_2$ relativ zu der Phasenlage $\varphi_{ind}$ der induzierten Spannung $U_{ind}$ hängt dabei insbesondere von der Entfernung des Sendelements vom zweiten Endabschnitt entlang der Längserstreckung *x* des Empfangsmoduls ab. Insbesondere hängt der gemessene Spannungswert $U_2$ sowie die zweite Phasenlage $\varphi_2$ relativ zu der Phasenlage $\varphi_{ind}$ der induzierten Spannung $U_{ind}$ von der Anzahl der elektrisch leitenden Querverbindungen mit vorbestimmten Widerständen ab, welche sich zwischen der Position des Sendeelements entlang der Längserstreckung *x* und dem zweiten Endabschnitt befinden. Alternativ oder zusätzlich zur Phasenlage $\varphi_{ind}$ der induzierten Spannung $U_{ind}$ kann auch eine andere Wechselspannung als Referenzspannung bzw. als Referenzphasenlage dienen.

Der Spannungswert $U_1$ ist umso größer je näher sich das Sendeelement an dem ersten Endabschnitt befindet und je kleiner die Anzahl der elektrisch leitenden Querverbindungen zwischen dem ersten Endabschnitt und der Position des Sendelements ist, da damit der resultierende elektrische Widerstand der parallel geschalteten Querverbindungen zwischen dem ersten Endabschnitt und der Position des Sendelements steigt. Entsprechend ist der Spannungswert $U_1$ umso kleiner je weiter die Position des Sendeelements von dem ersten Endabschnitt entfernt ist und je größer die Anzahl der elektrisch leitenden Querverbindungen zwischen dem ersten Endabschnitt und der Position des Sendelements ist, da damit der resultierende elektrische Widerstand der parallel geschalteten Querverbindungen zwischen dem ersten Endabschnitt und der Position des Sendelements sinkt. Ferner ist auch die Differenz der ersten Phasenlage $\varphi_1$ relativ zu der Phasenlage $\varphi_{ind}$ der induzierten Spannung $U_{ind}$ durch die Anzahl der elektrisch leitenden Querverbindungen zwischen dem ersten Endabschnitt und der Position des Sendelements beeinflusst bzw. bestimmt.

Umgekehrt ist auch der Spannungswert $U_2$ umso größer je näher sich das Sendeelement an dem zweiten Endabschnitt befindet und je kleiner die Anzahl der elektrisch leitenden Querverbindungen mit vorbestimmten Widerständen zwischen dem zweiten Endabschnitt und der Position des Sendelements ist. Entsprechend wird der Spannungswert $U_2$ auch umso kleiner je weiter die Position des Sendeelements von dem zweiten Endabschnitt entfernt ist und je größer die Anzahl der elektrisch leitenden Querverbindungen mit vorbestimmten Widerständen zwischen dem zweiten Endabschnitt und der Position des Sendelements ist. Ferner ist auch die Differenz der zweiten Phasenlage $\varphi_2$ relativ zu der Phasenlage $\varphi_{ind}$ der induzierten Spannung $U_{ind}$ durch die Anzahl der elektrisch leitenden Querverbindungen zwischen dem zweiten Endabschnitt und der Position des Sendelements beeinflusst bzw. bestimmt.

Insbesondere bestimmt sich der Unterschied zwischen der ersten Phasenlage $\varphi_1$ und/oder der zweiten Phasenlage $\varphi_2$ zueinander und/oder zur Phasenlage der induzierten Spannung $\varphi_{ind}$ durch einen Phasenwinkel der komplexen Impedanz, welcher wiederum vom Wert des (reellen) Wirkwiderstands und dem Wert des imaginären Blindwiderstands abhängt.

Insbesondere ist die Auswerteeinrichtung derart ausgelegt, aus der ersten Phasenlage $\varphi_1$ und/oder der zweiten Phasenlage $\varphi_2$ relativ zum Referenzsignal bzw. aus der Phasendifferenz zwischen dem ersten periodischen Signal und dem zweiten periodischen Signal die Position des Sendeelements entlang der Längserstreckung x des Empfangsmoduls zu bestimmen. Dafür muss es nicht erforderlich sein, dass die Spannungswerte $U_1$ und/oder $U_2$ und/oder deren jeweilige Phasenlage $\varphi_1$ bzw. $\varphi_2$ selbst von der Mess- bzw. Auswerteeinrichtung gemessen werden, sondern es kann bereits ausreichend sein, eine Differenz der beiden Phasenlagen $\varphi_1$ und $\varphi_2$ zu bestimmen.

Die Spannung $U_1$ und/oder $U_2$ kann dabei vor der Auswertung der Phasenlage $\varphi_1$ bzw. $\varphi_2$ einem Veränderungsprozess unterzogen werden, beispielsweise um die Auswertung zu erleichtern. Beispielsweise kann ein solcher Veränderungsprozess eine Verstärkung (Spannungsverstärkung) umfassen. Entscheidend ist dabei lediglich, dass der Veränderungsprozess nicht zu einer (unbekannten) Veränderung der jeweiligen Phasenlage führt, welche das Verhältnis bzw. die relative Lage der Phasenlagen $\varphi_1$ und $\varphi_2$ untereinander verändert.

Vorzugsweise umfasst die erste Endverbindung und/oder die zweite Endverbindung jeweils einen Kondensator und/oder eine Spule. Insbesondere entspricht der erste elektrische Blindwiderstand im Wesentlichen der Reaktanz eines Kondensators und/oder einer Spule, welcher bzw. welche in der ersten Endverbindung ausgebildet ist bzw. sind. Insbesondere entspricht der zweite elektrische Blindwiderstand im Wesentlichen der Reaktanz eines Kondensators und/oder einer Spule, welcher bzw. welche in der zweiten Endverbindung ausgebildet ist bzw. sind.

Jede Endverbindung weist somit eine komplexe Impedanz auf, bei welcher der Imaginärteil der Impedanz ungleich Null ist. Zumindest der imaginäre Anteil der Impedanz kann dabei in seiner Amplitude und in seinem Phasenwinkel bzw. Winkel von der Oszillationsfrequenz der an der jeweiligen Endverbindung anliegenden Spannung bzw. Wechselspannung abhängig sein. Beispielsweise kann die Impedanz einer jeden Endverbindung ferner einen reellen Anteil der Impedanz aufweisen, wie etwa einen ohmschen Widerstand. Der reelle Widerstand kann dabei beispielsweise durch zusätzliche Komponenten bzw. Bauteile verursacht sein, welche in der Endverbindung ausgebildet sind, und/oder durch einen Leitungswiderstand bestimmt sein.

Im Falle, dass eine Endverbindung einen Kondensator aufweist, kann der Blindwiderstand der Endverbindung im Wesentlichen der Kapazitanz des Kondensators entsprechen. Im Falle, dass eine Endverbindung eine Spule aufweist, kann der Blindwiderstand der Endverbindung im Wesentlichen dem induktiven Blindwiderstand (Induktanz) der Spule entsprechen. "Im Wesentlichen" bedeutet dabei, dass darüber hinaus parasitäre Ladungen bzw. Effekte auftreten können, welche einen Beitrag zu dem Blindwiderstand leisten.

Die erste Endverbindung und die zweite Endverbindung können dabei gleichartige Kondensatoren und/oder Spulen aufweisen und somit im Wesentlichen gleiche Blindwiderstandswerte aufweisen. Alternativ können die erste Endverbindung und die zweite Endverbindung unterschiedliche Kondensatoren und/oder Spulen aufweisen und dennoch im Wesentlichen gleichartige Blindwiderstandswerte aufweisen oder unterschiedliche Blindwiderstandswerte aufweisen. Jede Endverbindung kann dabei einen oder mehrere Kondensatoren und/oder eine oder mehrere Spulen aufweisen. Sofern in einer Endverbindung mehrere Spulen und/oder Kondensatoren vorhanden sind, können diese parallel und/oder in Reihe geschaltet sein. Ferner können mehrere Kondensatoren unterschiedliche oder gleiche Kapazitäten aufweisen und/oder mehrere Spulen unterschiedliche oder gleichartige Induktivitäten aufweisen.

Vorzugsweise weist jede Querverbindung im Wesentlichen ausschließlich einen ohmschen Widerstand auf, wobei vorzugsweise jeder der vorbestimmten elektrischen Wirkwiderstandswerte (R) der Querverbindungen jeweils im Wesentlichen ausschließlich durch den ohmschen Widerstand bestimmt ist.

Vorzugsweise weist jede Querverbindung der Vielzahl von Querverbindungen, zu welchen erfindungsgemäß die Endverbindungen nicht zählen, lediglich einen Wirkwiderstand auf. In anderen Worten ist der Widerstand einer Querverbindung ausschließlich durch einen reellen Wert einer Impedanz dieser Querverbindung bestimmt, d.h. dass die Impedanz der Querverbindung im Wesentlichen keinen imaginären Anteil hat bzw. dass dieser gleich Null ist. "Im Wesentlichen" bedeutet dabei, dass dennoch parasitäre Ladungen bzw. Effekte auftreten können, welche einen Blindwiderstand verursachen. Vorzugsweise weist eine Querverbindung ausschließlich einen ohmschen Widerstand auf.

Alternativ kann eine Querverbindung auch einen Blindwiderstand aufweisen, d.h. eine Impedanz aufweisen, welche eine reelle und eine komplexe Komponente hat, die ungleich Null sind. In diesem Fall müssen jedoch erfindungsgemäß der reelle Wirkwiderstand und der imaginäre Blindwiderstand der Querverbindung jeweils unterschiedlich, insbesondere unterschiedlich in ihrem Betrag, zu dem Wirkwiderstand bzw. dem Blindwiderstand einer jeden Endverbindung sein.

Vorzugsweise weist der erste Blindwiderstandswert und/oder der zweite Blindwiderstandswert bei der Frequenz des vom Sendeelement erzeugten bzw. induzierten periodischen Signals mindestens 1 Ω und/oder höchstens 10 kΩ, bevorzugt mindestens 10Ω und/oder höchstens 1 kΩ, weiter bevorzugt mindestens 20 Ω und/oder höchstens 0,5 kΩ, noch weiter bevorzugt mindestens 30 Ω und/oder höchstens 0,2 kΩ, am meisten bevorzugt mindestens 50 Ω und/oder höchstens 0,1 kΩ auf. Insbesondere handelt es sich bei den angegebenen Werten der Blindwiderstände um imaginäre Widerstände, d.h. um einen imaginären Teil einer komplexen Impedanz.

Vorzugsweise ist das Sendeelement ausgelegt ist, ein magnetisches Wechselfeld mit einer Frequenz im Bereich von zumindest etwa 100 Hz, besonders bevorzugt im Bereich von zumindest etwa 1 kHz, weiter bevorzugt im Bereich von zumindest etwa 10 kHz und/oder in einem Bereich von nicht mehr als etwa 10 MHz, besonders bevorzugt in einem Bereich von nicht mehr als etwa 1 MHz, weiter bevorzugt in einem Bereich von nicht mehr als etwa 100 kHz, am meisten bevorzugt in einem Bereich von etwa 10 kHz bis etwa 50 kHz zu erzeugen. Vorzugsweise ist die Frequenz des magnetischen Wechselfeldes für eine bestimmte Vorrichtung festgelegt und/oder ändert sich nicht während einer Messung bzw. Positionsbestimmung. Vorzugsweise weist das Sendeelement einen elektromagnetischen Schwingkreis auf, durch dessen Resonanzfrequenz im Wesentlichen die Frequenz des magnetischen Wechselfeldes bestimmt ist. Insbesondere entsprechen die oben angegebenen Werte für Impedanzen und/oder Widerstände und/oder Blindwiderstände den entsprechenden Werten bei der Resonanzfrequenz des Schwingkreises, sofern die Werte von der Oszillationsfrequenz einer anliegenden elektrischen Spannung abhängen.

Vorzugsweise umfasst das Empfangsmodul eine Anzahl an elektrisch leitenden Querverbindungen im Bereich von zumindest etwa 5, vorzugsweise in einem Bereich von zumindest etwa 20, weiter bevorzugt in einem Bereich von zumindest etwa 50 und/oder in einem Bereich von nicht mehr als etwa 1000, besonders bevorzugt in einem Bereich von nicht mehr als etwa 500, weiter bevorzugt in einem Bereich von nicht mehr als etwa 200.

Vorzugsweise liegen die vorbestimmten Wirkwiderstandswerte R der Vielzahl von elektrisch leitenden Querverbindungen jeweils im Bereich von zumindest etwa 0,1 kΩ, vorzugsweise in einem Bereich von zumindest etwa 0,5 kΩ, besonders bevorzugt in einem Bereich von zumindest etwa 1 kΩ und/oder in einem Bereich von nicht mehr als etwa 10 MΩ, besonders bevorzugt in einem Bereich von nicht mehr als etwa 1 MΩ, weiter bevorzugt in einem Bereich von nicht mehr als etwa 100kΩ, am meisten bevorzugt in einem Bereich von nicht mehr als etwa 10 kΩ liegen. Insbesondere handelt es sich dabei um den jeweiligen reellen Anteil, sofern es eine komplexe Impedanz betrifft, welche auch einen imaginären Blindwiderstand aufweist.

Das Sendeelement umfasst vorzugsweise eine Leiterschleife und/oder eine Spule. Insbesondere umfasst das Sendeelement vorzugsweise einen elektrischen Schwingkreis, welcher die Leiterschleife und/oder die Spule und einen Kondensator umfasst. Ein im Sendelement ausgebildeter Kondensator soll im Folgenden als Sendeelementkondensator bezeichnet werden, um Verwechslungen zu vermeiden. Ferner soll eine im Sendelement ausgebildete Spule im Folgenden als Sendeelementspule bezeichnet werden, um Verwechslungen zu vermeiden.

Vorzugsweise umfasst die Vorrichtung zur Positionsbestimmung eine Leistungsversorgungseinrichtung, wobei die Leistungsversorgungseinrichtung eine Leiterschleife umfasst, welche vorzugsweise im Wesentlichen in einer von der ersten und der zweiten Längsleiterkomponente aufgespannten Ebene verläuft und welche das Empfangsmodul zumindest teilweise umgibt und wobei die Leiterschleife der Leistungsversorgungseinrichtung die erste und die zweite Längsleiterkomponente vorzugsweise zumindest teilweise beinhaltet.

Das Sendeelement kann Teil eines Sendemoduls sein. Beispielsweise kann das Sendemodul neben dem Sendeelement noch eine oder mehrere Leistungsversorgungseinrichtungen zur Leistungsversorgung des Sendeelements umfassen. Vorzugsweise ist die Leiterschleife in einer Ebene angeordnet, welche zumindest teilweise parallel zu einer Ebene ist, welche durch die beiden Längsleiterkomponenten des Empfangsmoduls aufgespannt wird. Entsprechend ist bei der Verwendung einer Sendeelementspule die Sendeelementspule vorzugsweise derart angeordnet, dass die Längsachse der Sendeelementspule, welche durch die Mittelpunkte der von den Wicklungen aufgespannten Innenflächen verläuft, senkrecht zu der Ebene ist, welche durch die beiden Längsleiterkomponenten des Empfangsmoduls aufgespannt wird und/oder senkrecht zu einer Ebene steht, welche die beiden Längsleiterkomponenten in deren dem Sendeelement am nächsten liegenden Punkten tangiert. Die Sendeelementspule weist zumindest zwei Windungen auf. Vorzugsweise ist jedoch die Anzahl der Windungen größer als zwei, wie beispielsweise 10, 50 oder 100 Windungen. Auch eine größere Anzahl von Windungen, wie beispielsweise mehrere 100 oder gar mehr als 1000 Windungen, kann vorteilhaft sein. Ferner kann die Sendeelementspule einen ferromagnetischen Kern aufweisen, um den in der Spule erzeugten magnetischen Fluss zu erhöhen und/oder zu konzentrieren bzw. zu fokussieren. Der Kern der Spule kann dabei beispielsweise aus ferromagnetischen Werkstoffen und/oder Ferriten gefertigt sein.

Fließt ein elektrischer Strom durch die Leiterschleife bzw. durch die Sendeelementspule, erzeugt dies ein Magnetfeld bzw. einen magnetischen Fluss. Um das Sendelement mit der nötigen Energie bzw. Leistung zu versorgen, umfasst die Vorrichtung zur Positionsbestimmung vorzugsweise eine Leistungsversorgungseinrichtung. In einer bevorzugten Ausführungsform kann der elektrische Strom in der Leiterschleife bzw. in der Sendeelementspule durch die Leistungsversorgungseinrichtung bereitgestellt werden. Beispielsweise kann die Leistungsversorgungseinrichtung derart ausgelegt sein, dass diese eine elektrische Spannung an die Leiterschleife bzw. an die Sendeelementspule anlegt, welche wiederum einen Stromfluss durch die Leiterschleife bzw. durch die Spule hervorruft.

Vorzugsweise umfasst das Sendeelement einen elektrischen Schwingkreis, welcher die Leiterschleife und/oder die Sendeelementspule und einen Kondensator umfasst. Ferner kann der Schwingkreis einen oder mehrere Widerstände aufweisen, welche separat eingebaute Wirkwiderstandselemente und/oder anderweitig auftretende elektrische Widerstände, insbesondere Wirkwiderstände, umfassen können. Beispielsweise kann ein solcher anderweitig auftretender Widerstand durch den Leitungswiderstand im elektrischen Leiter des Schwingkreises oder durch die Widerstände anderer elektrische Komponenten im Schwingkreis auftreten.

Sofern das Sendeelement einen Schwingkreis umfasst, bietet dies den Vorteil, dass elektromagnetische Schwingungen und/oder ein mit der Resonanzfrequenz des Schwingkreises oszillierendes Magnetfeld in und um die Sendeelementspule herum auftreten können, auch wenn eine Versorgung des Schwingkreises mit elektrischer Leistung nicht mehr vorhanden ist. Mit anderen Worten ist es mittels eines Schwingkreises möglich, ein oszillierendes Magnetfeld bzw. einen oszillierenden magnetischen Fluss innerhalb der Sendeelementspule und um die Sendeelementspule herum auch dann zu erzeugen, wenn die Leistungsversorgungseinrichtung nicht mehr mit dem Schwingkreis verbunden ist bzw. nicht mehr an den Schwingkreis koppelt bzw. den Schwingkreis nicht mehr (aktiv) zur Schwingung anregt. Im Falle eines Schwingkreises kann die Leistungsversorgungseinrichtung als Gleichspannungsquelle ausgebildet sein, beispielsweise als Batterie oder als Gleichspannungsnetzteil, welche dazu ausgelegt ist, den Sendeelementkondensator aufzuladen. Alternativ kann die Leistungsversorgungseinrichtung auch als Wechselspannungsquelle, beispielsweise als Wechselspannungsnetzteil, ausgebildet sein, welche einen Wechselstromfluss im Sendeelement (Sendeelementstrom) anregt, sofern die Leistungsversorgungseinrichtung mit dem Schwingkreis des Sendelementes elektrisch verbunden ist.

Des Weiteren kann ein Schwingkreis alternativ oder zusätzlich auch durch induktive Kopplung mit elektrischer Energie versorgt werden. So ist beispielsweise eine Leistungsversorgungseinrichtung denkbar, welche wiederum als Spule oder als Leiterschleife ausgebildet ist, und welche mittels eines Wechselstromflusses oder eines veränderlichen Stromflusses in der Leistungsversorgungseinrichtung eine Änderung des magnetischen Flusses in der Sendeelementspule des Schwingkreises des Sendeelements erzeugt, wodurch eine elektrische Spannung und/oder ein elektrischer Stromfluss im Sendeelement (Sendeelementstrom) induziert wird.

In einer weiteren bevorzugten Ausführungsform umfasst die Leistungsversorgungseinrichtung eine Leiterschleife, welche insbesondere induktiv an das Sendeelement koppelt, um dieses mit der nötigen Energie bzw. Leistung zu versorgen. Insbesondere verläuft die Leiterschleife der Leistungsversorgungseinrichtung vorzugsweise im Wesentlichen in einer von der ersten und der zweiten Längsleiterkomponente aufgespannten Ebene und umgibt das Empfangsmodul zumindest teilweise. "Im Wesentlichen in einer von der ersten und der zweiten Längsleiterkomponente aufgespannten Ebene" bedeutet dabei, dass die Leiterschleife derart verläuft, dass das Sendelement in geringem Abstand, beispielsweise in einem Abstand von 1 mm bis 10 mm, über dem Empfangsmodul angeordnet werden kann, ohne dass die Positionierbarkeit des Sendeelements durch die Leistungsversorgungseinrichtung beeinträchtigt wird. Ferner bedeutet dies, dass sich die Senkrechte der Ebene der Leiterschleife der Leistungsversorgungseinrichtung in einem geeigneten Winkel zur Mittelachse der Spule des Sendelements befindet, so dass eine ausreichende Induktion von elektrischer Spannung und/oder elektrischem Strom in das Sendelement erfolgen kann.

Mittels einer derartig ausgebildeten Leistungsversorgungseinrichtung kann der Schwingkreis des Sendeelements mit elektrischer Leistung versorgt werden, unabhängig davon, an welcher Position sich das Sendeelement entlang der Längsrichtung x des Empfangsmoduls befindet. In einer bevorzugten Ausführungsform wird das Sendeelement im Wesentlichen kontinuierlich bzw. durchgängig, d.h. insbesondere auch während eines Messvorgangs mit elektrischer Leistung versorgt. In einer anderen bevorzugten Ausrührungsform wird das Sendeelement insbesondere mit elektrischer Leistung versorgt, während kein Messvorgang läuft. In diesem Fall wird das Sendeelement gewissermaßen geladen, während kein Messvorgang läuft. Besonders bevorzugt erfolgen in dieser Ausführungsform die Versorgung mit elektrischer Leistung und der Messvorgang abwechselnd. Dabei soll im Folgenden der Vorgang des Versorgens mit elektrischer Leistung als Leistungszyklus und der Messvorgang als Messzyklus bezeichnet werden.

In einer bevorzugten Ausführungsform beinhaltet die Leiterschleife der Leistungsversorgungseinrichtung zumindest teilweise die erste und die zweite Längsleiterkomponente. In anderen Worten wird die Leiterschleife der Leistungsversorgungseinrichtung unter anderem von den Längsleiterkomponenten des Empfangsmoduls gebildet. Beispielsweise können die Längsleiterkomponenten und eine elektrische Querverbindung mit sehr kleinem elektrischem Widerstand an einem Endabschnitt zur Leistungsversorgung des Sendeelements mit einer Wechselspannungsquelle verbunden sein. Zur Bestimmung der ersten Phasenlage $\varphi_1$ und/oder der zweiten Phasenlage $\varphi_2$, welche außerhalb von Leistungszyklen stattfinden, in denen gemäß der vorliegenden Ausführungsform die Längsleiterkomponenten mit der Spannungsquelle verbunden sind, sind hingegen die Längsleiterkomponenten von der Spannungsquelle zu trennen, um die von der Induktion durch das Sendeelement resultierenden Spannungswerte $U_1$ und/oder $U_2$ bzw. deren Phasenlagen $\varphi_1$ und/oder $\varphi_2$ messen zu können.

Vorzugsweise sind die Vielzahl von Querverbindungen äquidistant entlang der Längserstreckung x des Empfangsmoduls angeordnet. Besonders bevorzugt weist jede Querverbindung vorzugsweise einen identischen Wirkwiderstandswert R auf.

Vorzugsweise weisen die Querverbindungen einen äquidistanten Abstand zwischen 1 mm und 200 mm auf. Noch mehr bevorzugt weisen die Querverbindungen einen äquidistanten Abstand zwischen 3 mm und 50 mm auf. Am meisten bevorzugt weisen die Querverbindungen einen äquidistanten Abstand zwischen 5 mm und 15 mm auf.

Vorzugsweise weisen die Querverbindungen eine Länge zwischen 3 mm und 100 mm auf. Noch mehr bevorzugt weisen die Querverbindungen eine Länge zwischen 5 mm und 50 mm auf. Am meisten bevorzugt weisen die Querverbindungen eine Länge zwischen 10 mm und 20 mm auf.

In einer bevorzugten Ausführungsform verlaufen die elektrischen Querverbindungen geradlinig und senkrecht zur Längserstreckung *x* der Leiterlängskomponenten und die Querverbindungen weisen alle dieselbe Länge auf. In diesem Falle verlaufen die Leiterlängskomponenten parallel zueinander und der Abstand zwischen den Leiterlängskomponenten ist gleich der Länge der Querverbindungen.

In einem weiteren Aspekt betrifft die Erfindung ein Verfahren zur Positionsbestimmung umfassend die Schritte:

- Bereitstellen zumindest eines Empfangsmoduls mit

  -- zumindest einer ersten und einer zweiten Längsleiterkomponente, die sich entlang einer Längserstreckung x des Empfangsmoduls von einem ersten Endabschnitt des Empfangsmoduls zu einem zweiten Endabschnitt des Empfangsmoduls erstrecken;

  -- einer Vielzahl von elektrisch leitenden Querverbindungen, welche an einer Vielzahl von Positionen $x_i$ entlang der Längserstreckung *x* des Empfangsmoduls die erste und die zweite Längsleiterkomponente elektrisch leitend miteinander verbinden, wobei jede Querverbindung einen vorbestimmten elektrischen Wirkwiderstandswert R aufweist;

  -- eine erste elektrisch leitende Endverbindung, welche am ersten Endabschnitt die erste Längsleiterkomponente und die zweite Längsleiterkomponente miteinander verbindet, wobei die erste Endverbindung einen vorbestimmten ersten elektrischen Blindwiderstandswert aufweist;

- Induzieren eines elektrischen Stromflusses $I_{ind}$ und/oder einer elektrischen Spannung $U_{ind}$ mittels eines entlang der Längserstreckung *x* relativ zum Empfangsmodul bewegbaren Sendeelements;
- Bestimmen einer Position p des Sendeelements entlang der Längserstreckung x des Empfangsmoduls abhängig von einer Phasenverschiebung (erste Phasenlage $\varphi_1$) zwischen einem ersten periodischen Signal (z.B. elektrische Spannung oder elektrischer Strom) an dem ersten Endabschnitt und einem periodischen Referenzsignal.

Im Zusammenhang mit dem erfindungsgemäßen Verfahren und weiteren bevorzugten Ausführungsformen dazu gilt das zur erfindungsgemäßen Vorrichtung beschriebene in analoger Weise. Insbesondere kann in analoger Weise die Rolle der elektrisch leitenden Querverbindungen und der Endverbindung auch vertauscht werden, so dass jede der Querverbindungen anstelle der vorbestimmten elektrischen Wirkwiderstandswerts *R* einen vorbestimmten elektrischen Blindwiderstandswert X aufweist, während andererseits die erste elektrisch leitende Endverbindung anstelle des ersten elektrischen Blindwiderstandswertes $X_1$ einen ersten elektrischen Wirkwiderstandswert $R_1$ aufweist.

Bevorzugt erfolgt das Bestimmen der Position p des Sendeelements entlang der Längserstreckung x des Empfangsmoduls abhängig von einer Phasenverschiebung der ersten Phasenlage $\varphi_1$ der ersten elektrischen Spannung $U_1$ und/oder der zweiten Phasenlage $\varphi_2$ der zweiten elektrischen Spannung $U_2$ relativ zu einer Referenzphase einer Referenzspannung. Die Referenzspannung kann beispielsweise die im Schwingkreis des Sendelementes, wie etwa am Sendeelementkondensator, anliegende Spannung und/oder ein extern bereitgestelltes Wechselspannungssignal sein.

Besonders bevorzugt erfolgt das Bestimmen der Position des Sendeelements entlang der Längserstreckung *x* des Empfangsmoduls abhängig von einer Phasenverschiebung der ersten Phasenlage $\varphi_1$ der ersten elektrischen Spannung $U_1$ relativ zu der zweiten Phasenlage $\varphi_2$ der zweiten elektrischen Spannung $U_2$. In anderen Worten dient vorzugsweise die zweite Phasenlage $\varphi_2$ als Referenzphase für die erste Phasenlage $\varphi_1$ oder umgekehrt. Insbesondere kann es ausreichend sein, zur Positionsbestimmung lediglich die Differenz bzw. Phasenverschiebung zwischen der ersten und zweiten Phasenlage $\varphi_1$ und $\varphi_2$ zu ermitteln. Dies hat beispielsweise den Vorteil, dass keine weitere Referenzspannung separat bereitgestellt werden muss. Ferner hat dies den Vorteil, dass eventuell auftretende Störeinflüsse, welche die Induktion von Strom bzw. Spannung durch das Sendeelement in das Empfangsmodul beeinflussen, auf beide Spannungssignale $U_1$ und $U_2$ und/oder auf beide Phasenlagen $\varphi_1$ und $\varphi_2$ im Wesentlichen den gleichen Einfluss haben und sich somit negative Einflüsse auf die Positionsbestimmung vermeiden lassen.

Vorzugsweise ändert sich die erste Phasenlage $\varphi_1$ und/oder die zweite Phasenlage $\varphi_2$ bzw. die Phasenverschiebung im Wesentlichen linear mit einer Änderung der Position (p) des Sendeelements entlang der Längserstreckung (x) des Empfangsmoduls (12) ändert. In anderen Worten ist das erfindungsgemäße Verfahren bzw. die erfindungsgemäße Vorrichtung zur Positionsbestimmung derart ausgestaltet, dass die Phasenverschiebung bzw. die erste Phasenlage $\varphi_1$ und/oder die zweite Phasenlage $\varphi_2$ direkt proportional zu einer Positionsänderung der Position p des Sendeelement entlang der Längserstreckung x des Empfangsmoduls x ist.

Vorzugsweise koppelt während eines Leistungszyklus eine Leistungsversorgungseinrichtung induktiv an das Sendeelement und induziert einen elektrischen Stromfluss und/oder eine elektrische Spannung in dem Sendeelement.

Ferner koppelt bevorzugt in einem Messzyklus das Sendeelement induktiv an das Empfangsmodul und induziert einen elektrischen Stromfluss und/oder eine elektrische Spannung in dem Empfangsmodul. Der Leistungszyklus (LZ) und der Messzyklus (MZ) überlappen vorzugsweise zeitlich zumindest nicht vollständig.

Vorzugsweise erfolgt das Bestimmen der ersten Phasenlage $\varphi_1$ und/oder der zweiten Phasenlage $\varphi_2$ bzw. der Phasenverschiebung, insbesondere ausschließlich, während eines Messzyklus, in welchem keine induktive Leistungsversorgung des Sendeelements durch die Leistungsversorgungseinrichtung erfolgt. Dies soll verhindern, dass elektromagnetische Störeinflüsse durch die induktive Leistungsversorgung die Messung der Spannungen $U_1$ und $U_2$ bzw. der ersten Phasenlage $\varphi_1$ und/oder der zweiten Phasenlage $\varphi_2$ oder deren Verhältnis zueinander und/oder zu einer Referenzphasenlage verfälschen.

Darüber hinaus eignen sich das erfindungsgemäße Verfahren sowie erfindungsgemäße Vorrichtungen auch für eine Positionsbestimmung in mehreren Dimensionen bzw. Richtungen. Um beispielsweise eine zweidimensionale Positionsbestimmung zu ermöglichen, können mehrere Empfangsmodule nebeneinander gereiht werden. Vorzugsweise werden dabei mehrere Empfangsmodule von Vorrichtungen zur Positionsbestimmung derart nebeneinander angeordnet, dass deren Längsleiterkomponenten parallel zueinander verlaufen. Die Positionsbestimmung eines Sendeelements in einer Dimension, also in einer Richtung, erfolgt dabei wie bereits beschreiben mittels eines einzelnen entsprechenden Empfangsmoduls, über welchem sich das Sendeelement zum Messzeitpunkt befindet. In dem Empfangsmodul, über welchem sich das Sendeelement befindet werden im ersten Endabschnitt und im zweiten Endabschnitt der Längsleiterkomponenten, also an den Endverbindungen, Spannungswerte $U_1$ und $U_2$ induziert, so dass die Position des Sendeelements senkrecht zur Längserstreckung x der Längsleiterkomponenten bestimmt werden kann, indem ermittelt wird, an welchem Empfangsmodul die maximalen Spannungen $U_1$ und $U_2$ an den Endabschnitten anliegen. Die Positionsbestimmung in der anderen Dimension bzw. Richtung, d.h. entlang der Längserstreckung x der Längsleiterkomponenten kann sodann, wie bereits für den Fall der eindimensionalen Positionsbestimmungen beschrieben, erfolgen.

In einer weiteren bevorzugten Ausführungsform erfolgt die zweidimensionale Positionsbestimmung dadurch, dass das Empfangsmodul mäanderförmig verlaufend angeordnet wird. Damit ist es möglich, die zweidimensionale Positionsbestimmung mittels eines einzigen Empfangsmoduls zu realisieren.

In wiederum einer weiteren bevorzugten Ausführungsform erfolgt die zweidimensionale Positionsbestimmung dadurch, dass zumindest zwei Empfangsmodule derart angeordnet sind, dass deren Längserstreckungen x (und y) nicht parallel zueinander verlaufen, sondern einander insbesondere kreuzen. In einer besonders bevorzugten Ausführungsform liegen die Längserstreckungen x und y senkrecht zueinander, wobei aber auch ein auf die konkrete Anwendung angepasster anderer Winkel verwendet werden kann. Die zweidimensionale Positionsbestimmung erfolgt dabei insbesondere in einem Bereich bzw. einer Fläche in dem die beiden Empfangsmodule im Wesentlichen überlappen, d.h. in dem das Magnetfeld des Sendeelements (bzw. dessen zu bestimmende Position) zwischen den Längsleiterkomponenten beider Empfangsmodule hindurchtritt (bzw. liegt).

Weitere Vorteile, Eigenschaften und Merkmale der Erfindung werden nachfolgend mit Bezug auf Zeichnungen bevorzugter Ausführungsformen beispielhaft beschrieben. Es zeigt:

**Fig. 1** eine schematische Darstellung einer bevorzugten Ausführungsform eines erfindungsgemäßen Empfangsmoduls;

**Fig. 2** eine bevorzugte Ausführungsform einer erfindungsgemäßen Vorrichtung zur Positionsbestimmung;

**Fig. 3** eine zweite bevorzugte Ausführungsform einer erfindungsgemäßen Vorrichtung zur Positionsbestimmung;

**Fig. 4** eine dritte bevorzugte Ausführungsform einer erfindungsgemäßen Vorrichtung zur Positionsbestimmung;

**Fig. 5** graphische Darstellungen von Verläufen der ersten Phasenlage $\varphi_1$ und der zweiten Phasenlage $\varphi_2$ in Abhängigkeit der Position p des Sendelements für verschiedene bevorzugte Ausführungsformen;

**Fig. 6** graphische Darstellungen von Verläufen einer Phasenverschiebung zwischen der ersten Phasenlage $\varphi_1$ und der zweiten Phasenlage $\varphi_2$ in Abhängigkeit der Position p des Sendelements für verschiedene bevorzugte Ausführungsformen;

**Fig. 7A bis 7C** schematische Darstellungen des zeitlichen Verlaufs verschiedener Spannungsgrößen in einer bevorzugten Ausführungsform einer erfindungsgemäßen Vorrichtung zur Positionsbestimmung während des Betriebs.

**Fig. 1** zeigt eine schematische Darstellung eines Empfangsmoduls 12 einer bevorzugten Ausführungsform einer erfindungsgemäßen Vorrichtung zur Positionsbestimmung 10. Das Empfangsmodul 12 umfasst dabei eine geradlinig ausgebildete, erste Längsleiterkomponente 14a und eine parallel zur ersten Längsleiterkomponente 14a ausgebildete zweite Längsleiterkomponente 14b. Die beiden Längsleiterkomponenten 14a und 14b sind an einer Vielzahl von Positionen $x_i$ jeweils durch eine Vielzahl von elektrisch leitenden Querverbindungen 16 elektrisch leitend miteinander verbunden. In der gezeigten Ausführungsform unterteilt die Anzahl von $x_{max}$ äquidistant angeordneten Querverbindungen 16 an den Positionen $x_1$ bis $x_{max}$ das Empfangsmodul 12 entlang der Längserstreckung $x$ demnach in $x_{max-1}$ gleich große Empfangsmodulsegmente 12a. Die Positionen dieser Empfangsmodulsegmente 12a (insbesondere die Positionen deren Mittelpunkte) werden nachfolgend auch mit $p$ bezeichnet und von $p$ = 1 bis $p = p_{max}$-*1* durchnummeriert. Jede Querverbindung 16 weist einen bestimmten elektrischen Widerstandswert $R_i$ auf, welcher durch den Leitungswiderstand und durch ein eventuell ausgebildetes zusätzliches Wirkwiderstandselement 16a bedingt ist. Vorzugsweise ist ein zusätzliches Wirkwiderstandselement 16a in Form eines ohmschen Widerstands ausgebildet. Ohmscher Widerstand bedeutet dabei, dass das Wirkwiderstandselement 16a insbesondere einen Widerstandswert $R_i$ aufweist, welcher von der Frequenz einer im Rahmen einer erfindungsgemäßen Vorrichtung zur Positionsbestimmung 10 vorzugsweise verwendeten Wechselspannung vorzugsweise unabhängig ist. Vorzugsweise ist der Anteil des Leitungswiderstands der Querverbindung 16 im Vergleich zum Anteil des Wirkwiderstandselement 16a am Widerstandswert der Querverbindung 16 vernachlässigbar, weshalb im Folgenden davon ausgegangen wird, dass der Widerstand der Querverbindung 16 dem Widerstandswert $R_i$ des Wirkwiderstandselementes 16a entspricht.

Vorzugsweise sind die Wirkwiderstandselemente 16a der Vielzahl von Querverbindungen 16 identisch ausgebildet, so dass die Widerstandswerte $R_i$ der Querverbindungen 16 im Wesentlichen gleich sind. Im Wesentlichen gleich bedeutet dabei, dass die Wirkwiderstandselemente 16a im Rahmen üblicher Fertigungstoleranzen gleichartig sind und in diesem Rahmen liegende gleiche Wirkwiderstandswerte $R_i$ aufweisen. Die Gleichartigkeit der Wirkwiderstandswerte $R_i$ der Vielzahl von Querverbindungen 16 ist allerdings keine zwingende Voraussetzung, da auch die Verwendung von unterschiedlichen Wirkwiderstandselementen 16a, mit unterschiedlichen aber bekannten Widerstandswerten $R_i$ möglich ist.

Ereignet sich zwischen den beiden Längsleiterkomponenten insbesondere innerhalb eines der Empfangsmodulsegmente 12a (also zwischen zwei benachbarten Querverbindungen 16) eine zeitliche Änderung des magnetischen Flusses $\Phi$, so wird in beiden Längsleiterkomponenten 14a und 14b ein elektrischer Stromfluss (Induktionsstrom) induziert, welcher nach Art eines Wirbelstroms gemäß den Gesetzen der elektromagnetischen Induktion wiederum einen magnetischen Fluss im Empfangsmodul 12 erzeugt, welcher der ursächlichen, zeitlichen Änderung des magnetischen Flusses $\Phi (d\Phi/dt)$ entgegen wirkt. Eine zeitliche Änderung des magnetischen Flusses $\Phi$ bedeutet in diesem Zusammenhang, dass die Ableitung des magnetischen Flusses $\Phi$ nach der Zeit ungleich Null ist:

$$\frac{d\Phi}{dt} \neq 0$$

Der Induktionsstrom fließt dabei im Wesentlichen zirkular durch die Längsleiterkomponenten 14a und 14b sowie durch die Querverbindungen 16 und die Endverbindungen 19a und 19b. Zirkular bedeutet dabei, dass der Induktionsstrom in der zweiten Längsleiterkomponente 14b entgegengesetzt zur Stromflussrichtung in der ersten Längsleiterkomponente 14a fließt und in den Querverbindungen 16 zwischen der Position der Induktionswirkung (Empfangsmodulsegment, in dem die Flussänderung auftritt) und dem zweiten Endabschnitt 18b entgegengesetzt zur Stromflussrichtung in den Querverbindungen 16 zwischen der Position der Induktionswirkung und dem ersten Endabschnitt 18a fließt.

Insbesondere fließt in den Abschnitten der Längsleiterkomponenten 14a und 14b, welche das Empfangsmodulsegment 12a begrenzen, in dem die magnetische Flussänderung (also die Induktionswirkung) auftritt, ein Induktionsstrom $I_{ind}$ jeweils in entgegengesetzte Richtung. Dieser Induktionsstrom $I_{ind}$ führt zu einem Spannungsabfall mit einem ersten Spannungswert $U_1$ an den Wirkwiderstandselementen 16a in den Querverbindungen 16 zwischen dem ersten Endabschnitt 18a und der Position der Induktionswirkung und einem Spannungsabfall mit einem zweiten Spannungswert $U_2$ an den Wirkwiderstandselementen 16a in den Querverbindungen 16 zwischen der Position der Induktionswirkung und dem zweiten Endabschnitt 18b. Ferner bewirkt der Induktionsstrom $I_{ind}$ einen Spannungsabfall in der ersten Endverbindung 19a und der zweiten Endverbindung 19b. Gemäß der gezeigten bevorzugten Ausführungsform weist jede Endverbindung 19a bzw. 19b jeweils einen Kondensator 17 auf.

Die Summe der induzierten Spannungen $U_1$ und $U_2$ ist gemäß dem Induktionsgesetz gleich der zeitlichen Änderung des magnetischen Flusses $\Phi$:

$$U_1 + U_2 = \frac{d\Phi}{dt}$$

Der Wert bzw. die Höhe bzw. die Amplitude des ersten Spannungswertes $U_1$ hängt dabei von der Anzahl der Querverbindungen 16 zwischen dem ersten Endabschnitt 18a und der Position der Induktionswirkung ab. Tritt die Induktionswirkung im Empfangsmodulsegment an der Position *p* auf, so sind dies *p* Querverbindungen. Entsprechend hängt der Wert bzw. die Höhe bzw. die Amplitude des zweiten Spannungswertes $U_2$ von der Anzahl der Querverbindungen 16 ($p_{max}$-$p$ Querverbindungen) zwischen der Position der Induktionswirkung und dem zweiten Endabschnitt 18b und den Widerstandswerten $R_i$ der entsprechenden Querverbindungen 16 ab.

Die erste Spannung $U_1$ bestimmt sich demnach aus dem Induktionsstrom $I_{ind}$ und dem Wert der Wirkwiderstandselemente $R_i$ der Querverbindungen 16 zwischen dem ersten Endabschnitt 18a ($i=1$) und der letzten Querverbindung 16 vor Erreichen der Position der Induktionswirkung ($i=p$) sowie dem Kondensator 17 in der ersten Endverbindung 19a. Da der Kondensator 17 einen Blindwiderstand, also einen imaginären Widerstand, aufweist, ist nicht nur der reelle Widerstand sondern die komplexe Impedanz zu berücksichtigen. Die Impedanz $Z_1$ in der ersten Endverbindung 19a und der zweiten Endverbindung 19b ergibt sich in Abhängigkeit von dem Kondensator 17 in der ersten Endverbindung 19a und den Wirkwiderstandselementen 16a in den Querverbindungen 16 zwischen dem ersten Endabschnitt 18a und der Position der Induktionswirkung zu:

$$Z_1(p) = \sum_{i=1}^{p} \frac{1}{j\omega C_1 + \frac{1}{R_i}}$$

$R_i$ bezeichnet dabei den Wirkwiderstandswert der jeweiligen Querverbindung 16 an der Position $x_i$. Ferner bezeichnet $C_1$ die Kapazität des Kondensators 17, $\omega$ die Oszillationskreisfrequenz der Induktionsspannung $U_{ind}$ und j die imaginäre Einheit. Die Wirkwiderstände $R_i$ und der Blindwiderstand des Kondensators bilden eine Parallelschaltung von Widerständen, in der sich der Induktionsstrom $I_{ind}$ aufteilt.

Entsprechend ergibt sich die Impedanz $Z_2$ zwischen der ersten Querverbindung 16 entlang der Längserstreckung *x* nach der Position der Induktionswirkung ($i=p+1$) und dem zweiten Endabschnitt 18b ($i=p_{max}$) in Abhängigkeit

von dem Kondensator 17 mit einer Kapazität $C_2$ in der zweiten Endverbindung 19b und den Wirkwiderstandselementen 16a in den Querverbindungen 16 zwischen dem zweiten Endabschnitt 18b und der Position der Induktionswirkung zu:

$$Z_2(p) = \sum_{i=p+1}^{p_{max}} \frac{1}{j\omega C_2 + \frac{1}{R_i}}$$

Im Falle einer besonders bevorzugten Ausführungsform, in welcher die Kapazitäten $C_1$ und $C_2$ der Kondensatoren 17 in den Endverbindungen gleich groß sind, d.h. die gleiche Kapazität C aufweisen, und auch die Wirkwiderstandselemente 16a in jeder Querverbindung 16 gleich groß sind, d.h. den gleichen Widerstandswert R aufweisen, ergeben sich die Impedanzen $Z_1$ und $Z_2$ gemäß der folgenden Formeln:

$$Z_1(p) = \frac{1}{j\omega C + \frac{p}{R}}$$

$$Z_2(p) = \frac{1}{j\omega C + \frac{p_{max} - p}{R}}$$

Aufgrund der Induktionsspannung $U_{ind}$ fließt in den Endverbindungen 19a und 19b ein Induktionsstrom $I_{ind}$, dessen Zusammenhang mit den Spannungen in den Endverbindungen 19a und 19b durch die folgenden Gleichungen beschrieben ist:

$$U_1 = Z_1 \cdot I_{ind}$$

$$U_2 = Z_2 \cdot I_{ind}$$

$$Z_1 \cdot I_{ind} + Z_2 \cdot I_{ind} = U_{ind}$$

Für den Induktionsstrom $I_{ind}$ folgt ferner

$$I_{ind} = \frac{U_{ind}}{Z_1 + Z_2}$$

und die Abhängigkeit der Spannungen $U_1$ und $U_2$ von der Induktionsspannungen $U_{ind}$ sind durch die folgenden Gleichungen beschrieben:

$$U_1(p) = \frac{Z_1(p)}{Z_1(p) + Z_2(p)} U_{ind}$$

$$U_2(p) = \frac{Z_2(p)}{Z_1(p) + Z_2(p)} U_{ind}$$

Dabei ist die durch das Sendeelement 20 in das Empfangsmodul 12 induzierte Induktionsspannung $U_{ind}$ unabhängig von der Position p und kann daher in gewisser Weise als eine konstante Bezugsgröße betrachtet werden. Dagegen sind sowohl die Impedanzen $Z_1$ und $Z_2$ im ersten Endabschnitt 19a und im zweiten Endabschnitt 19b von der Position p des Sendeelements entlang der Längserstreckung x des Empfangsmoduls abhängig. Ferner sind die daran abfallenden Spannungen $U_1$ bzw. $U_2$ hinsichtlich ihrer Amplitude bzw. ihres Betrages und ihrer Phasenlage $\varphi_1$ bzw. $\varphi_2$ von der Position p des Sendelements abhängig.

Wie bereits eingangs dargelegt wurde, haben die Erfinder erkannt, dass sich in Abhängigkeit der Phasenlage $\varphi_1$ und/oder $\varphi_2$ die Position p des Sendelements entlang der Längserstreckung x des Empfangsmoduls besonders effizient bestimmen lässt. Die von der Position abhängige Phasenlage $\varphi_1(p)$ der Spannung $U_1$ wird im Folgenden aus den bekannten Größen berechnet, um eine Positionsbestimmung des Sendeelements 20 zu erlauben. Für die Spannung $U_1$ gilt:

$$\frac{U_1}{U_{ind}} = \frac{1}{1+\frac{Z_2}{Z_1}} = \frac{1}{1+\frac{j\omega C+\frac{p}{R}}{j\omega C+\frac{p_{max}-p}{R}}} = \frac{j\omega RC + p_{max} - p}{2j\omega RC + p_{max}}$$

$$\frac{U_1}{U_{ind}} = \frac{(j\omega RC + p_{max} - p)(2j\omega RC - p_{max})}{-4\omega^2 R^2 C^2 - p_{max}^2}$$

$$\frac{U_1}{U_{ind}} = \frac{-2\omega^2 R^2 C^2 - (p_{max} - p)\cdot p_m + j\omega RC(p_{max} - 2p)}{-4\omega^2 R^2 C^2 - p_{max}^2}$$

Die Phasenlage $\varphi_1(p)$ bestimmt sich gemäß der Gleichung

$$\varphi_1(p) = arctan\left(\frac{Im(Z_1)}{Re(Z_1)}\right)$$

Entsprechend ergibt sich für die Phasenlage $\varphi_1(p)$

$$\varphi_1(p) = \arctan\left[\frac{\omega RC(p_{max} - 2p)}{-2\omega^2 R^2 C^2 - (p_{max} - p)\cdot p_{max}}\right]$$

$$\varphi_1(p) = \arctan\left[\frac{\omega RC(2p - p_{max})}{2\omega^2 R^2 C^2 - (p - p_{max})\cdot p_{max}}\right]$$

Für eine besonders bevorzugte Ausführungsform, welche ein Empfangsmodul aufweist, das in der Richtung der Längserstreckung x achsensymmetrisch bezüglich einer Achse senkrecht zur Längserstreckung x durch den Mittelpunkt des Empfangsmoduls ist, kann die mathematische Darstellung der ersten Phasenlage $\varphi_1(p)$ wie folgt dargestellt werden:

$$\varphi_1(p) = \arctan\left[\frac{\omega RC\cdot\left[2(p-\frac{p_{max}}{2})\right]}{2\omega^2 R^2 C^2 - (p-\frac{p_{max}}{2})\cdot p_{max} + \frac{p_{max}^2}{2}}\right]$$

wobei der Term $\frac{p_{max}}{2}$ in gewisser Weise die Mitte des Empfangsmoduls entlang dessen Längsachsenrichtung festlegt.

In entsprechender Weise gilt für die Spannung $U_2$, welche in der zweiten Endverbindung 19b abfällt:

$$\frac{U_2}{U_{ind}} = \frac{1}{1+\frac{Z_1}{Z_2}} = \frac{1}{1+\frac{j\omega C + \frac{p_{max}-p}{R}}{j\omega C + \frac{p}{R}}} = \frac{j\omega RC + p}{2j\omega RC + p_{max}}$$

$$\frac{U_2}{U_{ind}} = \frac{(j\omega RC + p)(2j\omega RC - p_{max})}{-4\omega^2 R^2 C^2 - p_{max}^2}$$

$$\frac{U_2}{U_{ind}} = \frac{-2\omega^2 R^2 C^2 - p \cdot p_m + j\omega RC(2p - p_{max})}{-4\omega^2 R^2 C^2 - p_{max}^2}$$

Die von der Position p des Sendelements 20 abhängige zweite Phasenlage $\varphi_2(p)$ ergibt sich demnach zu

$$\varphi_2(p) = \arctan[\frac{\omega RC(2p - p_{max})}{-2\omega^2 R^2 C^2 - p \cdot p_{max}}]$$

$$\varphi_2(p) = -\arctan[\frac{\omega RC(2p - p_{max})}{2\omega^2 R^2 C^2 + p \cdot p_{max}}]$$

$$\varphi_2(p) = -\arctan[\frac{\omega RC \cdot [2(p - \frac{p_{max}}{2})]}{2\omega^2 R^2 C^2 + (p - \frac{p_{max}}{2}) \cdot p_{max} + \frac{p_{max}^2}{2}}]$$

Dies zeigt, dass die erste Phasenlage $\varphi_1(p)$ und/oder die zweite Phasenlage $\varphi_2(p)$ abhängig von der Position p des Sendelements entlang der Längserstreckung x des Empfangsmoduls sind. Daher kann in Abhängigkeit der ersten Phasenlage $\varphi_1(p)$ und/oder der zweiten Phasenlage $\varphi_2(p)$ die Position p des Sendeelements bestimmt werden.

Fig. 2 zeigt eine erste bevorzugte Ausführungsform einer erfindungsgemäßen Vorrichtung zur Positionsbestimmung 10 mit einem Sendeelement 20. In der gezeigten Ausführungsform umfasst das Sendeelement 20 einen elektromagnetischen Schwingkreis 22. Der Schwingkreis wiederum weist einen Widerstand 24 auf, welcher durch einen Leitungswiderstand im Schwingkreis 22 und/oder durch ein separat ausgebildetes Widerstandselement verursacht werden kann. Ferner umfasst der Schwingkreis in der dargestellten Ausführungsform einen Sendeelementkondensator 26, welcher an beiden Enden mit jeweils einem Ende einer Sendeelementspule 28 verbunden ist. Insbesondere kann die Sendeelementspule 28 vorzugsweise in der gezeigten Ausführungsform 100 Windungen aufweisen, welche mit einem Durchmesser von etwa 5 mm gewickelt sind. Der Durchmesser der Sendeelementspule 28 bzw. der Wicklungen senkrecht zur Mittelachse der Sendeelementspule 28 kann dabei in seiner Form frei gewählt werden. Insbesondere kann eine runde oder eine quadratische Form gewählt werden, welche in Ihren Abmessungen an die Ausmaße der Empfangsmodulsegmente 12a angepasst sind.

Insbesondere ist eine derartige Anpassung besonders effizient, wenn die Flächenausdehnung der zeitlichen Änderung der magnetischen Flussänderung $d\,\Phi/dt$ in der durch die erste Längsleiterkomponente 14a und die zweite Längsleiterkomponente 14b aufgespannten Ebene in etwa den Abmessungen eines Empfangsmodulsegments 16a entspricht. Bei unterschiedlich groß ausgebildeten Empfangsmodulsegmenten 16a können die für eine derartige Anpassung herangezogenen Abmessungen beispielsweise durch Mittelung über sämtliche Empfangsmodulsegmente 12a ermittelt werden.

Des Weiteren umfasst die Sendeelementspule 28 in der gezeigten Ausführungsform einen Spulenkern 30. Dieser kann ferromagnetische Stoffe (wie beispielsweise Fe, Ni und/oder Co) und/oder ferromagnetische Legierungen (wie beispielsweise AlNiCo und/oder SmCo und/oder Permalloy) aufweisen. Zusätzlich oder alternativ kann der Spulenkern 30 ferrimagnetische, insbesondere elektrisch schlecht-leitende oder nichtleitende, Substanzen wie etwa Ferrite (beispielsweise Hämatit $Fe_2O_3$ oder Magnetit $Fe_3O_4$) aufweisen. Ferrite haben dabei den Vorteil, dass durch die schlechten oder nicht vorhandenen Leitfähigkeiten verlustbringende Wirbelströme im Spulenkern 30 unterdrückt werden können. Der Spulenkern 30 ist dabei vorzugsweise an die Innenmaße der Sendeelementspule 28 angepasst und füllt diese aus. Hat beispielsweise die Sendeelementspule 28 einen runden Querschnitt mit einem Innendurchmesser von 5 mm und eine Länge von 50 mm, so ist es besonders effizient einen Spulenkern 30 mit ebenfalls einem runden Querschnitt von 5 mm Durchmesser und 50 mm Länge zu verwenden, damit dieser das durch die Wicklungen der Sendeelementspule 28 aufgespannte Innenvolumen der Spule 28 so gut wie möglich ausfüllt. Allerdings kann der Spulenkern 30 auch eine größere Länge als die Sendeelementspule 28 aufweisen und über diese hinausragen. Besonders effizient ist es jedoch, wenn der Spulenkern 30 bündig mit derjenigen Öffnung der Sendeelementspule 28 abschließt, welche dem Empfangsmodul 12 zugewandt ist. Dies hat den Vorteil, dass der Abstand zwischen Sendeelementspule 28 und Spulenkern 30 bzw. Sendeelement 20 zum Empfangsmodul 12 sehr klein gewählt werden kann, beispielsweise im Bereich von 1 mm bis 5 mm. Durch einen derart geringen Abstand zwischen Sendeelement 20 und Empfangsmodul 12 kann die zeitliche Änderung des magnetischen Flusses $\Phi$ im Empfangsmodul 12, die durch Induktion aufgrund eines Sendeelementstroms $I_{se}$ verursacht wird, maximiert werden.

Jedoch können andere bevorzugte Ausführungsformen der erfindungsgemäßen Vorrichtung zur Positionsbestimmung 10 auch andere Formen und/oder Größen des Spulenkerns 30 und/oder Anordnungen der Sendeelementspule 28 um den Spulenkern 30 aufweisen. Beispielsweise können weitere bevorzugte Ausführungsformen einen im Wesentlichen U-förmigen oder Hufeisen-förmigen Spulenkern 30 aufweisen, welcher teilweise oder vollständig von der Sendeelementspule 28 umwickelt sein kann. Beispielsweise kann die Induktion von elektrischer Leistung vom Sendeelement 20 in das Empfangsmodul 12 besonders effizient erfolgen, wenn ein Ende des U-förmigen bzw. Hufeisen-förmigen Spulenkerns 30 direkt über dem Empfangsmodul 12 angeordnet ist und das andere Ende des Spulenkerns 30 direkt unterhalb des Empfangsmoduls 12 angeordnet ist. In anderen Worten kann die Induktion besonders effizient erfolgen, wenn das Empfangsmodul 12 durch das "offene" Ende des U-förmigen bzw. Hufeisen-förmigen Spulenkerns 30 hindurch verläuft. Die Sendeelementspule 28 kann dabei beispielsweise entlang des gesamten Spulenkerns 30 von einem Ende des Spulenkerns 30 zu dem anderen Ende des Spulenkerns 30 gewickelt sein, oder auch nur entlang eines Teils des Spulenkerns 30. Auf diese Weise kann beispielsweise eine besonders effiziente Führung bzw. Bündelung von magnetischen Feldlinien durch das Empfangsmodul 12 hindurch erreicht werden. In einer anderen bevorzugten Ausführungsform wird als Spulenkern ein E-Kern (Kern in "E"-Form) verwendet, wobei insbesondere der mittlere Steg zur Einkopplung des magnetischen Wechselfeldes in einen Bereich zwischen den Längsleiterkomponenten 14a, 14b und die äußeren Stege des E-Kerns zur Rückführung des magnetischen Feldes jeweils außerhalb der ersten bzw. zweiten Längsleiterkomponente dient. Mit dieser Anordnung kann besonders effizient das Auftreten von magnetischen Streufeldern zwischen den Längsleiterkomponenten aber abseits von der Position des Sendeelements verringert werden.

Durch das Fließen eines sich zeitlich ändernden Sendeelementstroms $I_{se}$ im Schwingkreis 22 des Sendeelements 20 entsteht in der Sendeelementspule 28 ein sich zeitlich änderndes Magnetfeld. Der Spulenkern 30 verstärkt die Entstehung dieses Magnetfeldes. Wird der Schwingkreis 22 nicht durch eine externe Spannungsquelle getrieben (beispielsweise durch ein Wechselspannungsnetzteil) so oszilliert eine ggf. vorhandene Spannung am Kondensator 26 und der ggf. vorhandene Sendeelementstrom $I_{se}$ durch die Spule 28 mit der Resonanzfrequenz des Schwingkreises. Insbesondere oszillieren die Spannung und der Strom dann, wenn dem Schwingkreis zuvor elektrische Leistung hinzugefügt wurde, d.h. wenn der Schwingkreis 22 zuvor mit Wechselspannung bzw. mit Wechselstrom getrieben wurde oder der Kondensator mit Gleichspannung aufgeladen wurde und die Schwingungen noch nicht abgeklungen sind. Die Resonanzfrequenz, mit der die Spannung und der Sendeelementstrom $I_{se}$ nach Beendigung der Leistungsversorgung im Schwingkreis 22 oszilliert, ist in der gezeigten bevorzugten Ausführungsform hauptsächlich durch die Kapazität des Kondensators 26 und die Induktivität der Sendeelementspule 28 bestimmt. Anstelle eines LC-Schwingkreises oder zusätzlich kann im Sendelement auch ein anderer Oszillator, z.B. ein Quarzoszillator, verwendet werden.

Ist das Sendelement 20 über dem Empfangsmodul 12 angeordnet, so verursacht der durch die Sendeelementspule 28 oszillierende Sendeelementstrom $I_{se}$ im Empfangsmodul 12 lokal eine zeitliche Änderung des magnetischen Flusses $\Phi$, welche der zeitlichen Änderung des Sendeelementstrom $I_{se}$ folgt. Entsprechend wird im Empfangsmodul 12 auch ein Induktionsstrom $I_{ind}$ angeregt, welcher ebenfalls der zeitlichen Änderung des Sendeelementstrom $I_{se}$ folgt. Wie bereits oben beschrieben verursacht der Induktionsstrom $I_{ind}$ das Auftreten von Spannungssignalen am ersten Endabschnitt 18a und am zweiten Endabschnitt 18b des Empfangsmoduls 12, welche jeweils den Spannungswert $U_1$ bzw. $U_2$ aufweisen. Auch die Spannungswerte $U_1$ und $U_2$ folgen dabei der zeitlichen Änderung des Sendeelementstrom $I_{se}$. Die Spannungswerte $U_1$ und $U_2$ an den Endabschnitten 18a und 18b können dabei eine unterschiedliche Phasenlage $\varphi_1$ bzw. $\varphi_2$ aufweisen, welche maßgeblich durch den jeweiligen Blindwiderstand der Endverbindungen 19a bzw. 19b, insbesondere durch einen darin ausgebildeten Kondensator und/oder eine darin ausgebildete Spule, hervorgerufen werden.

Ferner weist die in Fig. 2 dargestellte Ausführungsform einen Leistungsversorgungsleiter 32 auf. Dieser umfasst eine Leiterschleife, welche in der durch die erste Längsleiterkomponente 14a und durch die zweite Längsleiterkomponente 14b aufgespannten Ebene um das Empfangsmodul 12 herum verläuft. Mittels einer Leistungsversorgungseinrichtung (nicht gezeigt) welche den Leistungsversorgungsleiter 32 vorzugsweise umfasst kann das Sendeelement 20 mit elektrischer Leistung versorgt werden. Zu diesem Zweck wird im Leistungsversorgungsleiter 32 durch die Leistungsversorgungseinrichtung ein sich zeitlich ändernder Leistungsversorgungsstrom $I_{LV}$ erzeugt. Auf diese Weise kann im Sendeelement 20 ein Sendeelementstrom $I_{se}$ induziert werden und der Schwingkreis 22 zum Schwingen angeregt werden. Dies geschieht besonders effizient, wenn der Leistungsversorgungsstrom $I_{LV}$ im Leistungsversorgungsleiter 32 als Wechselstrom ausgebildet ist, welcher mit der Resonanzfrequenz des Schwingkreises 22 oszilliert.

Für eine besonders vorteilhafte und effiziente Leistungsversorgung des Sendelements 20 durch den Leistungsversorgungsstrom $I_{LV}$ wird daher eine Phasenregelschleife (PLL = phase -locked loop) verwendet (nicht gezeigt), welche die Oszillationsfrequenz des Leistungsversorgungsstrom $I_{LV}$ derart bestimmt, dass diese eine möglichst geringe Abweichung von der Resonanzfrequenz des Schwingkreises 22 aufweist. Dies kann beispielsweise dadurch geschehen, dass zunächst der Schwingkreis durch einen Leistungsversorgungsstrom $I_{LV}$ beispielsweise mit einer nahe der Resonanzfrequenz vermuteten bzw. liegenden Oszillationsfrequenz oder einem kurzen Anregungspuls angeregt wird, und daraufhin der nach ggf. erfolgreicher Anregung des Schwingkreises 22 wiederum vom Schwingkreis 22 im Leistungsversorgungsleiter 32 induzierte Strom detektiert wird. Da der Schwingkreis 22 nach Beendigung der Leistungsversorgung durch die Leistungsversorgungseinrichtung stets mit seiner eigenen Resonanzfrequenz oszilliert, kann aus dem vom Schwingkreis 22 im Leistungsversorgungsleiter 32 induzierten Strom die Resonanzfrequenz bestimmt werden. Mit anderen Worten wird der Schwingkreis zunächst mit einem Anregungssignal angeregt, das die Resonanzfrequenz des Schwingkreises enthält oder nahe der Resonanzfrequenz des Schwingkreises liegt, um anschließend aus der "Antwort" des Schwingkreises 22 dessen Resonanzfrequenz zu bestimmen. Sollte beim ersten Versuch keine ausreichende Leistungsversorgung des Schwingkreises 22 stattfinden, kann der Vorgang mit anderen Oszillationsfrequenzen des Anregungssignals wiederholt werden.

Eine derartige Leistungsversorgung des Schwingkreises 22 mittels eines Leistungsversorgungsleiters 32 bietet den Vorteil, dass das Sendeelement 20 zur Leistungsversorgung nicht verkabelt werden muss und dass keine Batterien oder sonstige erneuerungsbedürftige Spannungsquellen im beweglichen Sendeelement 20 vorgesehen werden müssen. Dies erlaubt es, die Komplexität und die Größe des Sendeelements 20 zu reduzieren und störende Einflüsse auf dessen Bewegbarkeit durch eine etwaige Verkabelung zu vermeiden.

Fig. 3 zeigt eine zweite bevorzugte Ausführungsform einer erfindungsgemäßen Vorrichtung zur Positionsbestimmung 10. Beschreibungen von Komponenten der erfindungsgemäßen Vorrichtung zur Positionsbestimmung 10, die bereits im Rahmen der in Fig. 2 dargestellten Ausführungsform diskutiert wurden, sind analog für die zweite Ausführungsform, sofern vorhanden, zutreffend und werden daher nicht nochmals diskutiert.

Im Unterschied zur vorherigen Ausführungsform weist in der zweiten bevorzugten Ausführungsform der Leistungsversorgungsleiter 32 mehrere Windungen auf. Beispielsweise kann der Leistungsversorgungsleiter 32 drei Windungen um das Empfangsmodul 12 herum aufweisen. Dies hat den Effekt, dass die durch den Leistungsversorgungsstrom $I_{LV}$ verursachte Änderung des magnetischen Flusses innerhalb der Windungen des Leistungsversorgungsleiters 32 und die daraus resultierende Induktion des Sendeelementstrom $I_{se}$ in etwa um die Anzahl der Windungen vervielfacht wird. Somit kann ein geringerer Leistungsversorgungsstrom $I_{LV}$ ausreichend sein, um eine effiziente Leistungsversorgung des Sendeelements 20 zu bewirken.

Beispielsweise kann der Leistungsversorgungsstrom $I_{LV}$ einen Wert von 20 mA (Milliampere) aufweisen. Wenn der Leistungsversorgungsleiter 32 drei Windungen aufweist, verursacht dies in etwa eine Induktion eines Sendeelementstroms $I_{se}$, für den bei nur einer Leiterschleife im Leistungsversorgungsleiter 32 ein Leistungsversorgungsstrom $I_{LV}$ von 60 mA nötig wäre. Auch andere Vervielfachungswerte sind durch eine entsprechend andere Anzahl von Windungen möglich.

Fig. 4 zeigt eine dritte bevorzugte Ausführungsform einer erfindungsgemäßen Vorrichtung zur Positionsbestimmung 10. Beschreibungen von Komponenten der Vorrichtung zur Positionsbestimmung 10, die bereits im Rahmen der in Fig. 2 oder Fig. 3 dargestellten Ausführungsformen diskutiert wurden, sind analog für die dritte Ausführungsform, sofern vorhanden, zutreffend und werden daher nicht nochmals diskutiert.

In der dritten bevorzugten Ausführungsform umfasst der Leistungsversorgungsleiter 32 die erste Längsleiterkomponente 14a und die zweite Längsleiterkomponente 14b des Empfangsmoduls. D.h. dass die beiden Längsleiterkomponenten 14a und 14b einerseits als Leistungsversorgungsleiter 32 dienen, um das Sendelement 20 induktiv mit elektrischer Leistung zu versorgen und andererseits als Teil des Empfangsmoduls 12 dienen, um den vom Sendeelement 20 induzierten Induktionsstrom $I_{ind}$ zu leiten.

Um beide Funktionen der Längsleiterkomponenten 14a und 14b, nämlich einerseits als Leistungsversorgungsleiter 32 und andererseits als Teil des Empfangsmoduls 12, störungsfrei ausführen zu können, sind in der beschriebenen Ausführungsform mehrere Schaltkontakte 34 vorgesehen. Mittels dieser Schaltkontakte 34 können die Längsleiterkomponenten 14a und 14b einerseits von der Leistungsversorgungseinrichtung (nicht gezeigt), insbesondere von einer Spannungsversorgung der Leistungsversorgungseinrichtung, getrennt werden und andererseits kann ein am anderen Endabschnitt 18b ausgebildeter elektrischer Kurzschluss der beiden Längsleiterkomponenten 14a und 14b unterbrochen werden. Der genannte elektrische Kurzschluss ist zur Verwendung als Leistungsversorgungsleiter 32 erforderlich, um mittels der Leistungsversorgungseinrichtung das Sendeelement 20 mit Leistung zu versorgen, allerdings wäre der elektrische Kurzschluss während der Messung der Spannungswerte $U_1$ und $U_2$ bzw. während dem Ermitteln der Phasenlage $\varphi_1$ und/oder $\varphi_1$ hinderlich.

Aus diesem Grund müssen die Schaltkontakte 34 während Leistungsversorgungs-Phasen bzw. in Leistungszyklen LZ, in denen das Sendeelement 20 mit elektrischer Leistung versorgt wird, geschlossen und somit elektrisch leitend sein. Entsprechend müssen die Schaltkontakte 34 während Mess-Phasen bzw. in Messzyklen MZ, in denen Messung der Spannungswerte $U_1$ und $U_2$ bzw. der Phasenlage $\varphi_1$ und/oder $\varphi_2$ im Empfangsmodul erfolgt, geöffnet und somit nicht-leitend sein.

Fig. 5 zeigt graphische Darstellungen von Verläufen der ersten Phasenlage $\varphi_1$ und der zweiten Phasenlage $\varphi_2$ in Abhängigkeit der Position p des Sendelements für verschiedene bevorzugte Ausführungsformen. Die für die Vorrichtung 10 zur Positionsbestimmung gewählten Parameter sind dabei $p_{max}$ = 50, d.h. es ist in der Vorrichtung 10 eine Anzahl von 50 elektrisch leitenden Querverbindungen ausgebildet. Jede Querverbindung weist dabei in der verwendeten, bevorzugten Ausführungsform einen ohmschen Widerstand von R = 3,3 $k\Omega$ auf. Die Die Frequenz der Wechselspannung zur Anregung des Schwingkreises 22 des Sendelements 20, sowie die Resonanzfrequenz des Schwingkreises 22 ist f = 32 *kHz* und die entsprechende Resonanzkreisfrequenz gleich $\omega = 2\pi f$ = 201 *kHz.*

Die Verläufe der Phasenlage $\varphi_1$ und $\varphi_2$ sind für zwei verschiedene Vorrichtungen 10 aufgetragen, welche in den oben dargelegten Parametern identisch sind, die sich jedoch in den Kondensatoren 17 in den jeweiligen Endverbindungen 19a und 19b unterscheiden. In der ersten Konfiguration weist die Vorrichtung 10 an den Endverbindungen 19a und 19b jeweils einen Kondensator 17 mit einer Kapazität von 68 nF auf, weshalb somit die Endverbindungen 19a und 19b einen Blindwiderstandswert gemäß der Formel $|X_C| = \left|-\frac{1}{\omega C}\right|$ von 73 Ω aufweisen. In der zweiten Konfiguration weist die Vorrichtung 10 an den Endverbindungen 19a und 19b jeweils einen Kondensator 17 mit einer Kapazität von 150 nF auf, weshalb somit die einen Endverbindungen 19a und 19b jeweils einen Blindwiderstandswert gemäß der Formel $|X_C| = \left|-\frac{1}{\omega C}\right|$ von 33 Ω aufweisen.

Für beide Konfigurationen ist in Fig. 6 der Verlauf der Phasenlagen $\varphi_1$ und $\varphi_2$ gegen die Position p des Sendelements 20 aufgetragen. Diese zeigen jeweils für beide Konfigurationen einen nahezu linearen, gegenläufigen Verlauf, welcher nur leicht gekrümmt ist und nur leicht von einem linearen Verlauf abweicht. Während in beiden Fällen die erste Phasenlage $\varphi_1$ streng monoton steigend zunimmt mit wachsender Entfernung des Sendeelements vom ersten Endabschnitt 19a, nimmt die zweite Phasenlage $\varphi_2$ streng monoton fallend ab mit abnehmender Entfernung des Sendeelements 20 vom zweiten Endabschnitt 19b.

Die verschiedenen Kapazitäten, welche die beiden Konfigurationen der Vorrichtung 10 unterscheiden, bewirken dabei eine unterschiedliche Steigung der Änderung der Phasenlagen $\varphi_1$ und $\varphi_2$. Die etwas größere Kapazität von 150 nF der Kondensatoren 17 hat dabei eine geringere Steigung der Änderung der Phasenlagen $\varphi_1$ und $\varphi_2$ mit sich ändernder Position p des Sendeelements 20 zur Folge, als die etwas kleine Kapazität von 68 nF der Kondensatoren 17. In anderen Worten weist die Vorrichtung in der Konfiguration mit jeweils einem Kondensator mit einer Kapazität 68 nF in den Endabschnitten 19a und 19b eine größere Empfindlichkeit auf als die ansonsten gleichartige Vorrichtung, welche im Unterschied zur ersten Konfiguration jeweils einen Kondensator 17 mit einer Kapazität von 150 nF in der ersten und der zweiten Endverbindung 19a und 19b aufweist. Andererseits ist erkennbar, dass im Beispiel mit der höheren Kapazität von 150 nF die Linearität des Zusammenhangs zwischen der Position und der Phasenlage gegenüber dem Beispiel mit niedrigerer Kapazität verbessert wird. Mittels einer geeigneten Wahl des Blindwiderstandes der jeweiligen Endverbindungen 19a und 19b kann somit auf effiziente Weise ein gewünschtes Maß an Sensitivität und Linearität eingestellt und die Vorrichtung zur Positionsbestimmung auf die Erfordernisse und gewünschten Eigenschaften hin optimiert werden.

Die Abhängigkeit der Steigung des Verlaufs der Phasenlagen $\varphi_1$ und $\varphi_2$ kann insbesondere dadurch verstanden werden, dass der Term $(\omega RC)^2$ im Nenner der Formeln für die ersten Phasenlage $\varphi_1$ und die zweite Phasenlage $\varphi_2$ mit zunehmender Kapazität C quadratisch wächst, während die verbleibenden Terme im Nenner, welche von p abhängen, nicht mit zunehmender Kapazität C wachsen. Dies führt dazu, dass mit zunehmender Kapazität C der $(\omega RC)^2$ den Nenner bzw. die Phasenlage $\varphi_1$ bzw. $\varphi_2$ dominiert und/oder die weiteren Terme, welche von p abhängigen, zunehmend vernachlässigbar werden.

Unter den Bedingungen, welche eine derartige Näherung erlauben, d.h. unter welchen die von p abhängigen Terme im Nenner der Funktion für die Phasenlagen $\varphi_1$ und $\varphi_2$ dominiert werden, können die Phasenlagen $\varphi_1$ und $\varphi_2$ durch die folgenden Formeln ausgedrückt werden:

$$\varphi_1(p) \approx \arctan\left[\frac{1}{\omega RC}\left(p - \frac{p_{max}}{2}\right)\right]$$

$$\varphi_2(p) \approx -\arctan[\frac{1}{\omega RC}(p - \frac{p_{max}}{2})]$$

Aufgrund des gemäß der Näherung dominierend Terms $\omega RC$, wird zudem das Argument der Arkustangens-Funktion klein, sodass die Arkustangens-Funktion lokal durch eine Taylorreihe unter Berücksichtigung der ersten Näherungsordnung durch arctan(x) $\approx$ x genähert werden kann, womit sich die obigen Formeln wie folgt vereinfachen:

$$\varphi_1(p) \approx \frac{1}{\omega RC}[p - \frac{p_{max}}{2}]$$

$$\varphi_2(p) \approx -\frac{1}{\omega RC} \cdot [p - \frac{p_{max}}{2}]$$

Dies entspricht einer linearen Funktion, welche sich wie in Fig. 6 gezeigt auch experimentell näherungsweise zeigt.

Fig. 6 zeigt graphische Darstellungen von Verläufen der Phasenverschiebung zwischen der ersten Phasenlage $\varphi_1$ und der zweiten Phasenlage $\varphi_2$ in Abhängigkeit der Position p des Sendelements für die zwei verschiedenen Konfigurationen der Vorrichtung 10, welche bereits mit Bezug auf Fig. 5 beschrieben wurden.

Die Phasenverschiebung entspricht dabei der Differenz der beiden Phasenlagen $\varphi_1$ und $\varphi_2$:

$$\Delta\varphi(p) = \varphi_1(p) - \varphi_2(p)$$

Wie in Fig. 6 zu erkennen ist, weist auch hierbei der Graph der Phasenverschiebung $\Delta\varphi(p)$ eine andere Steigung für unterschiedliche Kapazitäten der Kondensatoren 17 in den Endverbindungen 19a und 19b auf. Die Abweichungen von einem linearen Verlauf sind dabei geringer, als bei den Graphen der einzelnen Phasenlagen $\varphi_1$ und $\varphi_2$. Dies kann beispielsweise daher rühren, dass die Beiträge, welche zu der Abweichung führen, bei der Differenzbildung bzw. bei der Phasenverschiebung $\Delta\varphi(p)$ zumindest teilweise herausfallen.

Aus diesem Grund kann es besonders vorteilhaft sein, die Positionsbestimmung in Abhängigkeit der Phasenverschiebung $\Delta\varphi$ durchzuführen, da unter Umständen eine größere Messgenauigkeit erzielt werden kann, als bei Verwendung der einzelnen Phasenlagen $\varphi_1$ und/oder $\varphi_2$ ohne die Bildung einer Differenz.

Fig. 7A bis 7C zeigen schematische Darstellungen des zeitlichen Verlaufs verschiedener Spannungsgrößen in einer bevorzugten Ausführungsform einer erfindungsgemäßen Vorrichtung zur Positionsbestimmung während des Betriebs. Fig. 7A zeigt den zeitlichen Verlauf der elektrischen Spannung $U_{ind}$, welche vom Sendeelement 20 in dem Empfangsmodul 10 induziert wird. Fig. 7B und 7C zeigen die an der ersten Endverbindung 19a bzw. an der zweiten Endverbindung 19B abfallende Spannung $U_1$ bzw. $U_2$. Die dargestellten zeitlichen Verläufe der jeweiligen Spannungen sind dabei auf einen Messzyklus MZ beschränkt, d.h. der Verlauf der Spannung während des Leistungszyklus LZ ist nicht dargestellt, da dieser typischerweise für die Positionsbestimmung nicht berücksichtigt wird.

Eine vertikale Hilfslinie VH, welche sich über alle drei Figuren Fig. 7A bis 7C erstreckt, markiert dabei einen beliebigen Zeitpunkt, an welchem die jeweiligen Phasenlage $\varphi_{ind}$ der induzierten Spannung $U_{ind}$, die erste Phasenlage $\varphi_1$ der ersten Spannung $U_1$ und die zweite Phasenlage $\varphi_2$ der zweiten Spannung $U_2$ betrachtet werden. Dabei ist zu erkennen, dass die drei Spannungen $U_{ind}$, $U_1$ und $U_2$ nicht gleichphasig oszillieren, sondern dass die erste Phasenlage $\varphi_1$ der Spannung U1 sowie die zweite Phasenlage $\varphi_2$ der Spannung $U_2$ sowohl untereinander als auch von der Phasenlage der induzierten Spannung $U_{ind}$ verschieden sind. Die Unterschiede in den Phasenlagen rührt dabei durch die Blindwiderstände in den Endverbindungen 19a und 19b her, welche eine Phasenverschiebung des in den Endverbindungen 19a und 19b abfallenden Spannungssignal relativ zur induzierten Spannung $U_{ind}$ bewirken. Insbesondere sind die Unterschiede der Phasenlagen von p abhängig, d.h. von der Anzahl der elektrisch leitenden Querverbindungen 16, welche sich zwischen der jeweiligen Endverbindung 19a bzw. 19b und der Position des Sendeelements 20 entlang der Längserstreckung x des Empfangsmoduls 12 befinden. Da mit jeder elektrisch leitenden Querverbindung, welche sich zwischen dem jeweiligen Endabschnitt bzw. der Endverbindung und der Position des Sendelements parallel geschaltet befindet, der Betrag des Wirkwiderstands ändert, über welchem zusammen mit dem Blindwiderstand die jeweilige Spannung $U_1$ bzw. $U_2$ abfällt, ändert sich auch der Winkel des komplexen Widerstands bzw. der Impedanz, welche sich aus dem Wirkwiderstand und dem Blindwiderstand in den Querverbindungen und der Endverbindung zusammen setzt. Diese Änderung, hauptsächlich des reellen Teils des Widerstands bzw. der Impedanz, führt sodann zu einer Abhängigkeit

der Phasenlage $\varphi_1$ bzw. $\varphi_2$ von der Position p des Sendelements entlang der Position x des Empfangsmoduls 12. Folglich kann die Phasenlage $\varphi_1$ und/oder die Phasenlage $\varphi_2$ relativ zueinander und/oder relativ zur Phasenlage der induzierten Spannung $U_{ind}$ als Referenzphase und/oder die Phasenverschiebung bzw. Phasendifferenz zwischen $\varphi_1$ und $\varphi_2$ verwendet werden, um daraus erfindungsgemäß die Position p des Sendemoduls entlang der Längserstreckung x des Empfangsmoduls zu ermitteln.

Auch wenn die Erfindung in einigen Ausführungsformen vor allem anhand der Implementierung mit Wirkwiderstandswerten in den Querverbindungen und Blindwiderstandswerten in den Endverbindungen beschrieben wurde, kann sie in analoger Weise auch mit den vertauschten Rollen von Wirk- und Blindwiderstandswerten implementiert und genutzt werden. Somit sind insbesondere die Ausführungen zu den Bauteilen und/oder Zahlenwerten des ersten und/oder zweiten elektrischen Blindwiderstandswerts in der jeweiligen Endverbindung der ersten Implementierung auch auf die vorbestimmten elektrischen Blindwiderstandswerte in der Vielzahl von Querverbindungen in der zweiten Implementierung übertragbar. Entsprechend sind vorzugsweise die Ausführungen zu den Bauteilen und/oder Zahlenwerten der vorbestimmten elektrischen Wirkwiderstandswerte in den Querverbindungen der ersten Implementierung auch auf den ersten und/oder zweiten elektrischen Wirkwiderstandswert in der jeweiligen Endverbindung der zweiten Implementierung übertragbar.

Bezugszeichenliste

| | |
|---|---|
| 10 | Vorrichtung zur Positionsbestimmung |
| 12 | Empfangsmodul |
| 12a | Empfangsmodulsegment |
| 14a | erste Längsleiterkomponente |
| 14b | zweite Längsleiterkomponente |
| 16 | Querverbindung |
| 16a | Wirkwiderstandselement |
| 17 | Kondensator |
| 18a | erster Endabschnitt |
| 18b | zweiter Endabschnitt |
| 19a | erste Endverbindung |
| 19b | zweite Endverbindung |
| 20 | Sendeelement |
| 22 | Schwingkreis |
| 24 | Schwingkreiswiderstand |
| 26 | Sendeelementkondensator |
| 28 | Sendeelementspule |
| 30 | Spulenkern |
| 32 | Leistungsversorgungsleiter |
| 34 | Schaltkontakt |
| x | Längserstreckung (des Empfangsmoduls) |
| $x_i$ | Position einer Querverbindung entlang der Längserstreckung *x* |
| p | Position des Sendeelements entlang der Längserstreckung |
| $p_{max}$ | Position der letzten Querverbindung |
| $\Phi$ | magnetischer Fluss |
| *da/dt* | zeitliche Änderung des magnetischen Flusses |
| $U_1$ | erster Spannungswert |
| $U_2$ | zweiter Spannungswert |
| $I_{ind}$ | Induktionsstrom (im Empfangsmodul) |
| $I_{se}$ | Sendeelementstrom |
| $I_{LV}$ | Leistungsversorgungsstrom |
| LZ | Leistungszyklus |
| MZ | Messzyklus |
| VH | vertikale Hilfslinie |

**Patentansprüche**

1. Vorrichtung zur Positionsbestimmung (10), umfassend:

   - zumindest ein Empfangsmodul (12) mit

     -- zumindest einer ersten und einer zweiten Längsleiterkomponente (14a, 14b), die sich entlang einer Längserstreckung (x) des Empfangsmoduls (12) von einem ersten Endabschnitt (18a) des Empfangsmoduls (12) zu einem zweiten Endabschnitt (18b) des Empfangsmoduls (12) erstrecken;
     -- einer Vielzahl von elektrisch leitenden Querverbindungen (16), welche an einer Vielzahl von Positionen ($x_i$) entlang der Längserstreckung (x) des Empfangsmoduls (12) die erste und die zweite Längsleiterkomponente (14a, 14b) elektrisch leitend miteinander verbinden, wobei jede Querverbindung (16) einen vorbestimmten elektrischen Wirkwiderstandswert *(R)* aufweist; und
     -- eine erste elektrisch leitende Endverbindung (19a), welche am ersten Endabschnitt (18a) die erste Längsleiterkomponente (14a) und die zweite Längsleiterkomponente (14b) miteinander verbindet, wobei die erste Endverbindung (19a) einen vorbestimmten ersten elektrischen Blindwiderstandswert ($X_1$) aufweist;

   - ein entlang der Längserstreckung *(x)* relativ zum Empfangsmodul (12) bewegbares Sendeelement (20), welches ausgelegt ist, im Empfangsmodul einen periodischen elektrischen Stromfluss ($I_{ind}$) und/oder eine periodische elektrische Spannung ($U_{ind}$) zu induzieren; und
   - eine Auswerteeinrichtung, welche ausgelegt ist, ein erstes periodisches Signal ($U_1$) am ersten Endabschnitt zu erfassen und abhängig von einer von einer Position (p) des Sendeelements (20) entlang der Längserstreckung (x) des Empfangsmoduls (12) abhängigen Phasenverschiebung zwischen dem ersten periodischen Signal ($U_1$) und einem periodischen Referenzsignal die Position (p) des Sendeelements (20) entlang der Längserstreckung (x) des Empfangsmoduls (12) zu bestimmen.

2. Vorrichtung nach Anspruch 1, wobei das Empfangsmodul außerdem umfasst:

   -- eine zweite elektrisch leitende Endverbindung (19b), welche am zweiten Endabschnitt (18b) die erste Längsleiterkomponente (14a) und die zweite Längsleiterkomponente (14b) miteinander verbindet, wobei die zweite Endverbindung (19b) einen vorbestimmten zweiten elektrischen Blindwiderstandswert ($X_2$) aufweist,

   wobei die erste Endverbindung (19a) und/oder die zweite Endverbindung (19b) vorzugsweise jeweils einen Kondensator (17) und/oder eine Spule umfassen.

3. Vorrichtung zur Positionsbestimmung (10), umfassend:

   - zumindest ein Empfangsmodul (12) mit

     -- zumindest einer ersten und einer zweiten Längsleiterkomponente (14a, 14b), die sich entlang einer Längserstreckung (x) des Empfangsmoduls (12) von einem ersten Endabschnitt (18a) des Empfangsmoduls (12) zu einem zweiten Endabschnitt (18b) des Empfangsmoduls (12) erstrecken;
     -- einer Vielzahl von elektrisch leitenden Querverbindungen (16), welche an einer Vielzahl von Positionen ($x_i$) entlang der Längserstreckung *(x)* des Empfangsmoduls (12) die erste und die zweite Längsleiterkomponente (14a, 14b) elektrisch leitend miteinander verbinden, wobei jede Querverbindung (16) einen vorbestimmten elektrischen Blindwiderstandswert (X) aufweist; und
     -- eine erste elektrisch leitende Endverbindung (19a), welche am ersten Endabschnitt (18a) die erste Längsleiterkomponente (14a) und die zweite Längsleiterkomponente (14b) miteinander verbindet, wobei die erste Endverbindung (19a) einen vorbestimmten ersten elektrischen Wirkwiderstandswert ($R_1$) aufweist;

   - ein entlang der Längserstreckung *(x)* relativ zum Empfangsmodul (12) bewegbares Sendeelement (20), welches ausgelegt ist, im Empfangsmodul einen periodischen elektrischen Stromfluss ($I_{ind}$) und/oder eine periodische elektrische Spannung ($U_{ind}$) zu induzieren; und
   - eine Auswerteeinrichtung, welche ausgelegt ist, ein erstes periodisches Signal ($U_1$) am ersten Endabschnitt zu erfassen und abhängig von einer von einer Position (p) des Sendeelements (20) entlang der Längserstreckung (x) des Empfangsmoduls (12) abhängigen Phasenverschiebung zwischen dem ersten periodischen Signal ($U_1$) und einem periodischen Referenzsignal die Position (p) des Sendeelements (20) entlang der Längserstreckung (x) des Empfangsmoduls (12) zu bestimmen.

**4.** Vorrichtung nach Anspruch 3, wobei das Empfangsmodul außerdem umfasst:

-- eine zweite elektrisch leitende Endverbindung (19b), welche am zweiten Endabschnitt (18b) die erste Längsleiterkomponente (14a) und die zweite Längsleiterkomponente (14b) miteinander verbindet, wobei die zweite Endverbindung (19b) einen vorbestimmten zweiten elektrischen Wirkwiderstandswert ($R_2$) aufweist,

wobei jeder der Vielzahl elektrisch leitender Querverbindungen vorzugsweise jeweils einen Kondensator (17) und/oder eine Spule umfassen.

**5.** Vorrichtung nach einem der vorangegangenen Ansprüche, wobei die Auswerteeinrichtung ausgelegt ist, ein zweites periodisches Signal ($U_2$) am zweiten Endabschnitt (18b) zu erfassen und abhängig von einer Phasendifferenz zwischen dem ersten periodischen Signal ($U_1$) und dem zweiten periodischen Signal ($U_2$) die Position (p) des Sendeelements (20) entlang der Längserstreckung (x) des Empfangsmoduls (12) zu bestimmen.

**6.** Vorrichtung nach einem der vorhergehenden Ansprüche, wobei der erste Blindwiderstandswert ($X_1$) und/oder der zweite Blindwiderstandswert ($X_2$) bzw. die vorbestimmten Blindwiderstandswerte (X) der Vielzahl von elektrisch leitenden Querverbindungen insbesondere bei zumindest einem mittels des Sendeelements induzierbaren periodischen elektrischen Stromflusses ($I_{ind}$) bzw. zumindest einer mittels des Sendeelements induzierbaren periodischen elektrischen Spannung ($U_{ind}$) mindestens 1 Ω und/oder höchstens 10 kΩ, bevorzugt mindestens 10 Ω und/oder höchstens 1 kΩ, weiter bevorzugt mindestens 20 Ω und/oder höchstens 0,5 kΩ, noch weiter bevorzugt mindestens 30 Ω und/oder höchstens 0,2 kΩ, am meisten bevorzugt mindestens 50 Ω und/oder höchstens 0,1 kΩ ist bzw. sind; und/oder
wobei die vorbestimmten Wirkwiderstandswerte (R) der Vielzahl von elektrisch leitenden Querverbindungen (16) bzw. der erste Wirkwiderstandswert ($R_1$) und/oder der zweite Wirkwiderstandswert ($R_2$) jeweils im Bereich von zumindest etwa 0,1 kΩ, vorzugsweise in einem Bereich von zumindest etwa 0,5 kΩ, besonders bevorzugt in einem Bereich von zumindest etwa 1 kΩ und/oder in einem Bereich von nicht mehr als etwa 10 MΩ, besonders bevorzugt in einem Bereich von nicht mehr als etwa 1 MΩ, weiter bevorzugt in einem Bereich von nicht mehr als etwa 100 kΩ, am meisten bevorzugt in einem Bereich von nicht mehr als etwa 10 kΩ liegen bzw. liegt.

**7.** Vorrichtung nach einem der vorhergehenden Ansprüche, wobei das Sendeelement (20) ausgelegt ist, ein magnetisches Wechselfeld mit einer Frequenz im Bereich von zumindest etwa 100 Hz, besonders bevorzugt im Bereich von zumindest etwa 1 kHz, weiter bevorzugt im Bereich von zumindest etwa 10 kHz und/oder in einem Bereich von nicht mehr als etwa 10 MHz, besonders bevorzugt in einem Bereich von nicht mehr als etwa 1 MHz, weiter bevorzugt in einem Bereich von nicht mehr als etwa 100 kHz, am meisten bevorzugt in einem Bereich von etwa 10 kHz bis etwa 50 kHz zu erzeugen.

**8.** Vorrichtung nach einem der vorhergehenden Ansprüche, wobei das Empfangsmodul (12) eine Anzahl an elektrisch leitenden Querverbindungen (16) im Bereich von zumindest etwa 5, vorzugsweise in einem Bereich von zumindest etwa 20, weiter bevorzugt in einem Bereich von zumindest etwa 50 und/oder in einem Bereich von nicht mehr als etwa 1000, besonders bevorzugt in einem Bereich von nicht mehr als etwa 500, weiter bevorzugt in einem Bereich von nicht mehr als etwa 200 umfasst; und/oder
wobei die Vielzahl von Querverbindungen (16) äquidistant entlang der Längserstreckung (x) des Empfangsmoduls (12) angeordnet sind, und/oder
wobei jede Querverbindung (16) vorzugsweise einen identischen Wirkwiderstandswert (R) bzw. Blindwiderstandswert (X) aufweist.

**9.** Vorrichtung nach einem der vorhergehenden Ansprüche, wobei das Sendeelement (20) eine Leiterschleife und/oder eine Spule (28) umfasst, und wobei das Sendeelement vorzugsweise einen elektrischen Schwingkreis (22) umfasst, welcher die Leiterschleife und/oder die Spule (28) und einen Kondensator (26) umfasst.

**10.** Vorrichtung nach einem der vorangegangenen Ansprüche, ferner umfassend eine Leistungsversorgungseinrichtung, wobei die Leistungsversorgungseinrichtung eine Leiterschleife umfasst, welche vorzugsweise im Wesentlichen in einer von der ersten und der zweiten Längsleiterkomponente (14a, 14b) aufgespannten Ebene verläuft und welche das Empfangsmodul (12) zumindest teilweise umgibt und wobei die Leiterschleife der Leistungsversorgungseinrichtung die erste und die zweite Längsleiterkomponente (14a, 14b) vorzugsweise zumindest teilweise beinhaltet.

**11.** Verfahren zur Positionsbestimmung umfassend die Schritte:

- Bereitstellen zumindest eines Empfangsmoduls (12) mit

-- zumindest einer ersten und einer zweiten Längsleiterkomponente (14a, 14b), die sich entlang einer Längserstreckung (x) des Empfangsmoduls (12) von einem ersten Endabschnitt (18a) des Empfangsmoduls (12) zu einem zweiten Endabschnitt (18b) des Empfangsmoduls (12) erstrecken;
-- einer Vielzahl von elektrisch leitenden Querverbindungen (16), welche an einer Vielzahl von Positionen ($x_i$) entlang der Längserstreckung (x) des Empfangsmoduls (12) die erste und die zweite Längsleiterkomponente (14a, 14b) elektrisch leitend miteinander verbinden, wobei jede Querverbindung (16) einen vorbestimmten elektrischen Wirkwiderstandswert (R) aufweist;
-- einer ersten elektrisch leitenden Endverbindung (19a), welche am ersten Endabschnitt (18a) die erste Längsleiterkomponente (14a) und die zweite Längsleiterkomponente (14b) miteinander verbindet, wobei die erste Endverbindung (19a) einen vorbestimmten ersten elektrischen Blindwiderstandswert ($X_1$) aufweist;

- Induzieren eines periodischen elektrischen Stromflusses ($I_{ind}$) und/oder einer periodischen elektrischen Spannung ($U_{ind}$) mittels eines entlang der Längserstreckung (x) relativ zum Empfangsmodul (12) bewegbaren Sendeelements (20);
- Bestimmen einer Position (p) des Sendeelements (20) entlang der Längserstreckung (x) des Empfangsmoduls (12) abhängig von einer Phasenverschiebung zwischen einem ersten periodischen Signal an dem ersten Endabschnitt und einem periodischen Referenzsignal.

**12.** Verfahren zur Positionsbestimmung umfassend die Schritte:

- Bereitstellen zumindest eines Empfangsmoduls (12) mit

-- zumindest einer ersten und einer zweiten Längsleiterkomponente (14a, 14b), die sich entlang einer Längserstreckung (x) des Empfangsmoduls (12) von einem ersten Endabschnitt (18a) des Empfangsmoduls (12) zu einem zweiten Endabschnitt (18b) des Empfangsmoduls (12) erstrecken;
-- einer Vielzahl von elektrisch leitenden Querverbindungen (16), welche an einer Vielzahl von Positionen ($x_i$) entlang der Längserstreckung (x) des Empfangsmoduls (12) die erste und die zweite Längsleiterkomponente (14a, 14b) elektrisch leitend miteinander verbinden, wobei jede Querverbindung (16) einen vorbestimmten elektrischen Blindwiderstandswert (X) aufweist;
-- einer ersten elektrisch leitenden Endverbindung (19a), welche am ersten Endabschnitt (18a) die erste Längsleiterkomponente (14a) und die zweite Längsleiterkomponente (14b) miteinander verbindet, wobei die erste Endverbindung (19a) einen vorbestimmten ersten elektrischen Wirkwiderstandswert ($R_1$) aufweist;

- Induzieren eines periodischen elektrischen Stromflusses ($I_{ind}$) und/oder einer periodischen elektrischen Spannung ($U_{ind}$) mittels eines entlang der Längserstreckung (x) relativ zum Empfangsmodul (12) bewegbaren Sendeelements (20);
- Bestimmen einer Position (p) des Sendeelements (20) entlang der Längserstreckung (x) des Empfangsmoduls (12) abhängig von einer Phasenverschiebung zwischen einem ersten periodischen Signal an dem ersten Endabschnitt und einem periodischen Referenzsignal.

**13.** Verfahren nach Anspruch 11 oder 12, wobei das Empfangsmodul bereitgestellt wird mit einer zweiten elektrisch leitenden Endverbindung (19b), welche am zweiten Endabschnitt (18b) die erste Längsleiterkomponente (14a) und die zweite Längsleiterkomponente (14b) miteinander verbindet, wobei die zweite Endverbindung (19b) einen vorbestimmten zweiten elektrischen Blindwiderstandswert ($X_2$) bzw. einen vorbestimmten zweiten elektrischen Wirkwiderstand ($R_2$) aufweist, und wobei die Position des Sendeelements (20) entlang der Längserstreckung (x) des Empfangsmoduls (12) abhängig von einer Phasendifferenz zwischen dem ersten periodischen Signal und einem zweiten periodischen Signal an dem zweiten Endabschnitt bestimmt wird.

**14.** Verfahren nach einem der Ansprüche 11 bis 13, wobei sich die erste Phasenlage $\varphi_1$ und/oder die zweite Phasenlage $\varphi_2$ und/oder die Phasenverschiebung im Wesentlichen linear mit einer Änderung der Position (p) des Sendeelements entlang der Längserstreckung *(x)* des Empfangsmoduls (12) ändert.

**15.** Verfahren nach einem der Ansprüche 11 bis 14, wobei während eines Leistungszyklus eine Leistungsversorgungseinrichtung induktiv an das Sendeelement (20) koppelt und einen elektrischen Stromfluss und/oder eine elektrische Spannung in dem Sendeelement (20) induziert, und
wobei in einem Messzyklus (MZ) das Sendeelement (20) induktiv an das Empfangsmodul (12) koppelt und einen elektrischen Stromfluss und/oder eine elektrische Spannung in dem Empfangsmodul (20) induziert, wobei der Leistungszyklus (LZ) und der Messzyklus (MZ) zeitlich zumindest nicht vollständig überlappen.

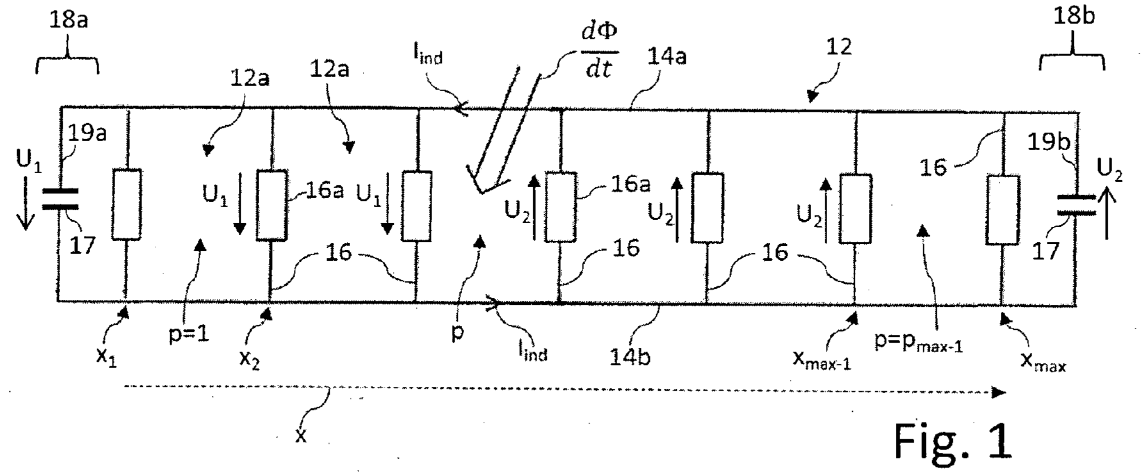
18a
18b
12a
12a
$I_{ind}$
$\frac{d\Phi}{dt}$
14a
12
19a
19b
$U_1$
$U_2$
16a
16
17
p=1
p
$p=p_{max-1}$
$x_1$
$x_2$
$x_{max-1}$
$x_{max}$
14b
x

Fig. 1

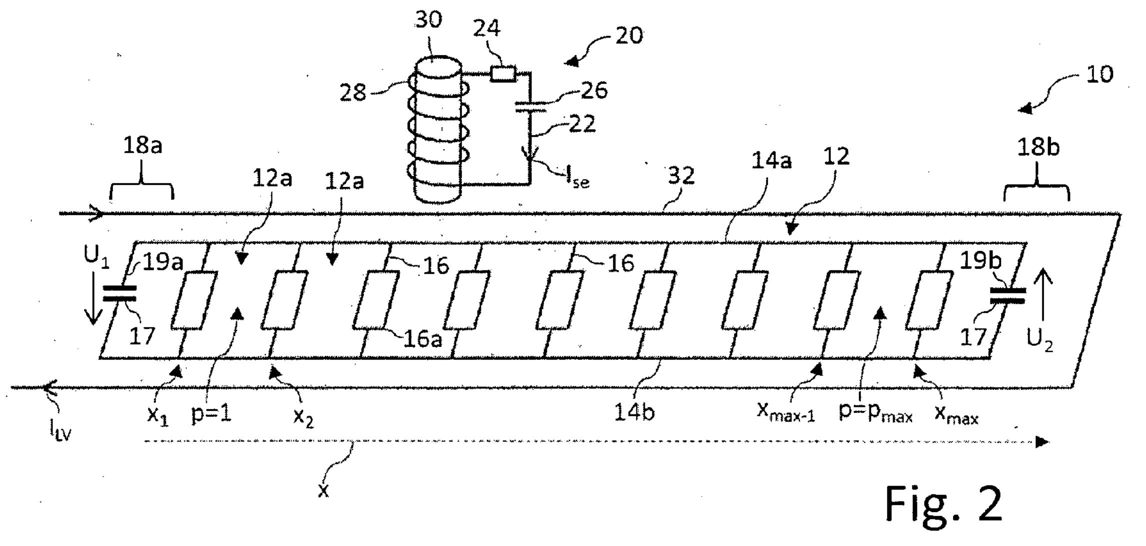
30
24
20
28
26
22
$I_{se}$
10
18a
12a
12a
32
14a
12
18b
$U_1$
19a
16
16
19b
17
16a
17
$U_2$
$x_1$
p=1
$x_2$
14b
$x_{max-1}$
$p=p_{max}$
$x_{max}$
$I_{LV}$
x

Fig. 2

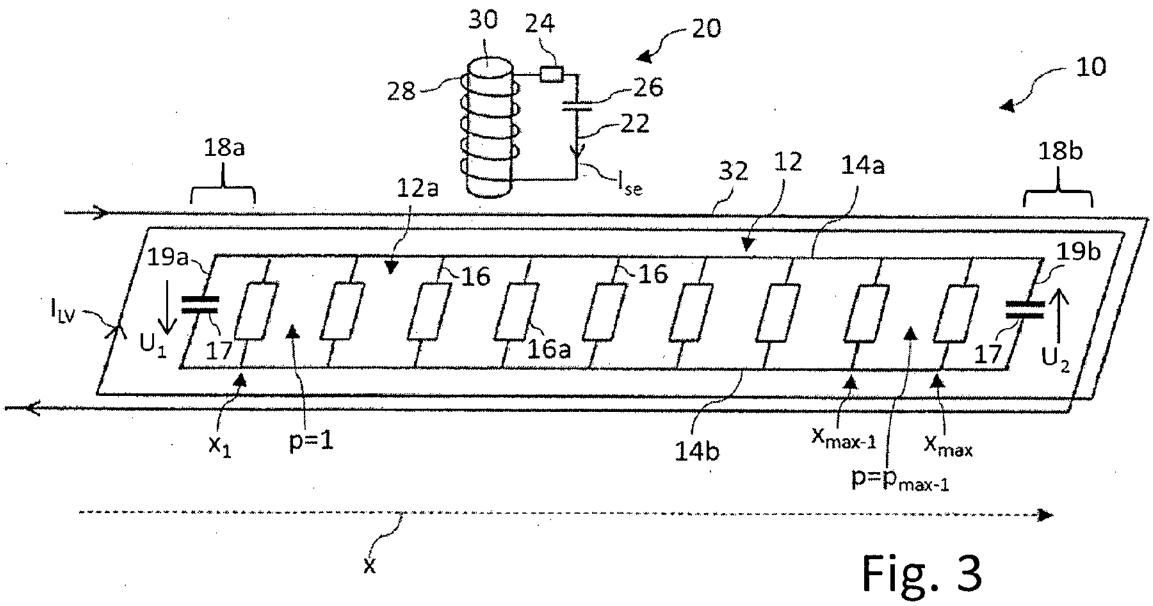
30
24
20
10
28
26
22
$I_{se}$
18a
18b
32
12
14a
12a
19a
19b
16
16
$I_{LV}$
$U_1$
17
16a
17
$U_2$
$x_1$
p=1
14b
$x_{max-1}$
$x_{max}$
$p=p_{max-1}$
x

Fig. 3

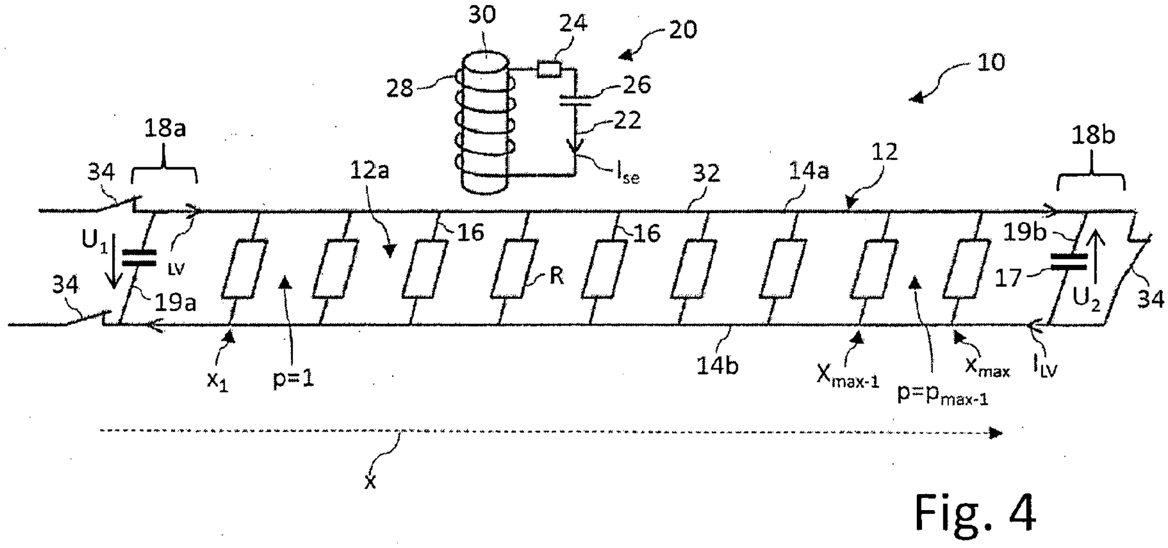
30
24
20
10
28
26
22
18a
$I_{se}$
18b
12
34
12a
32
14a
19b
$U_1$
16
16
LV
R
17
34
19a
$U_2$
34
$x_1$
p=1
14b
$x_{max-1}$
$p=p_{max-1}$
$x_{max}$
$I_{LV}$
x

Fig. 4

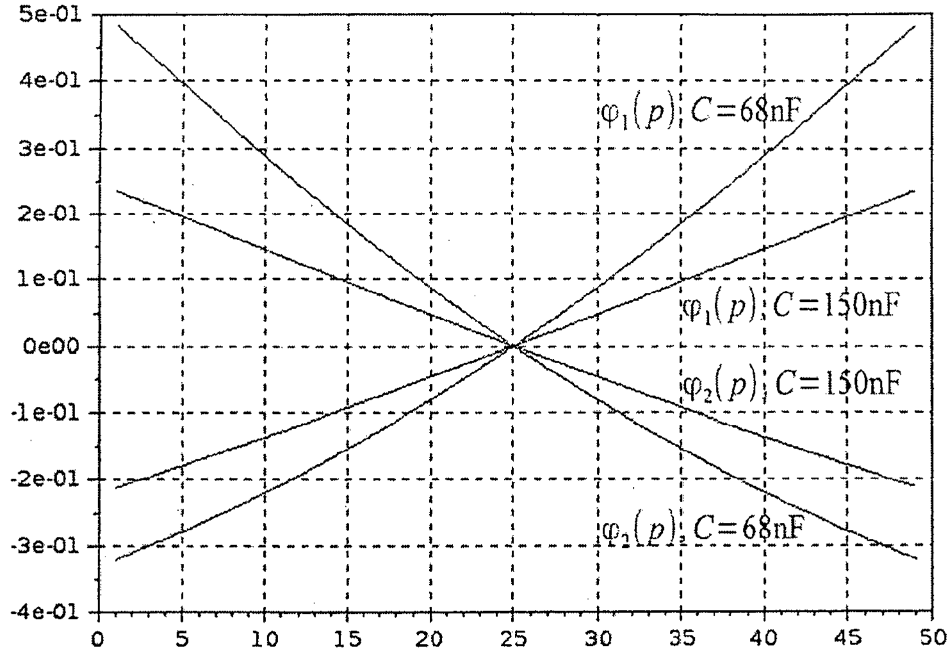
5e-01
4e-01
3e-01
2e-01
1e-01
0e00
-1e-01
-2e-01
-3e-01
-4e-01
0
5
10
15
20
25
30
35
40
45
50
φ1(p); C=68nF
φ1(p); C=150nF
φ2(p); C=150nF
φ2(p); C=68nF

Fig. 5

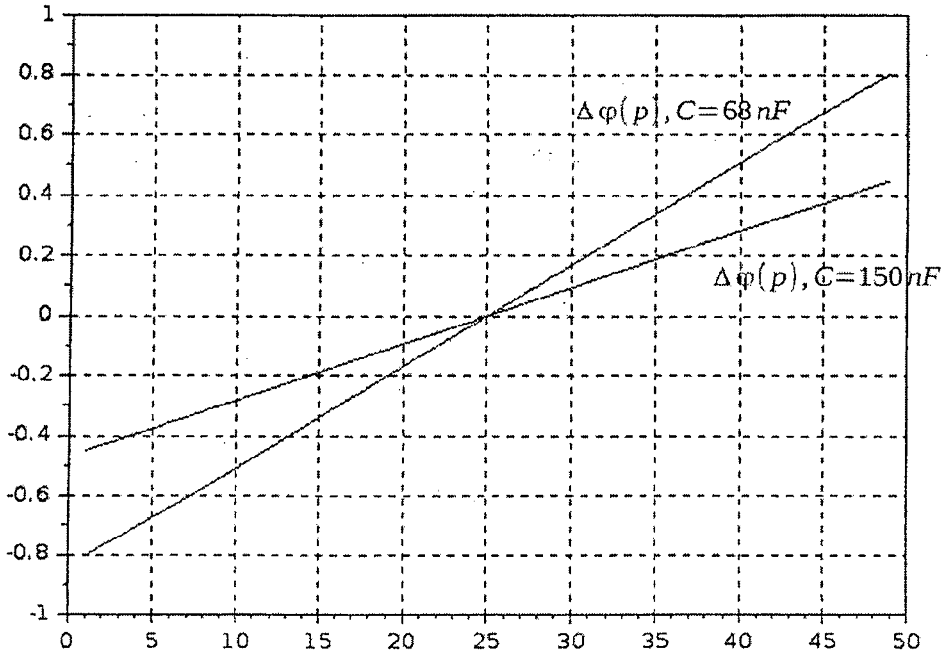
1
0.8
0.6
0.4
0.2
0
-0.2
-0.4
-0.6
-0.8
-1
0
5
10
15
20
25
30
35
40
45
50
Δφ(p), C=68 nF
Δφ(p), C=150 nF

Fig. 6

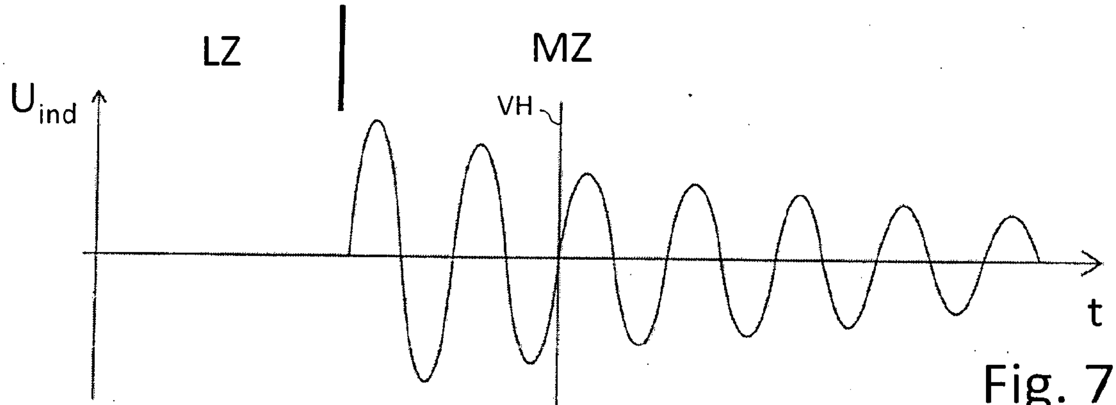


Fig. 7A

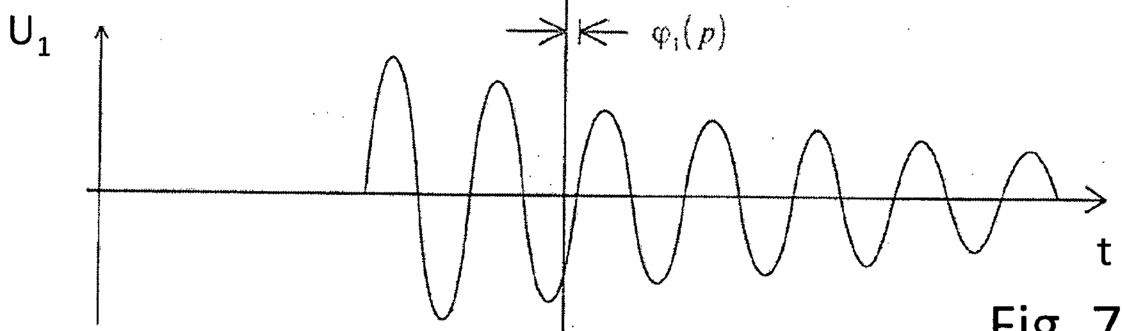


Fig. 7B

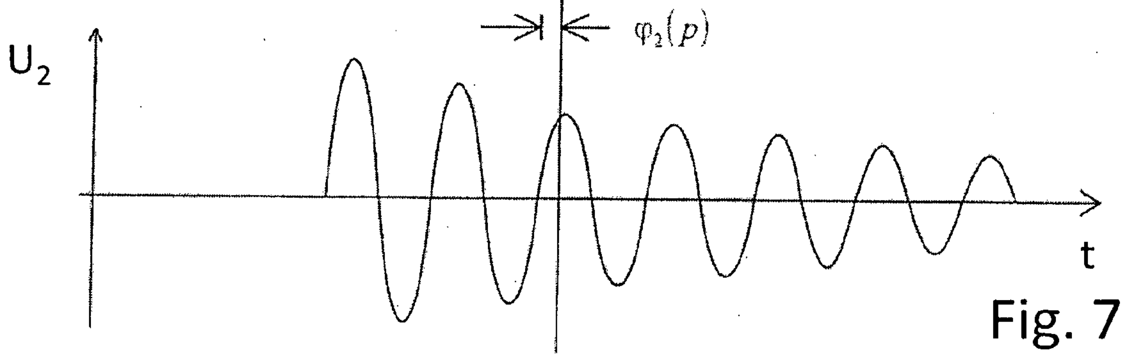


Fig. 7C

Europäisches Patentamt
European Patent Office
Office européen des brevets

# EUROPÄISCHER RECHERCHENBERICHT

Nummer der Anmeldung
EP 15 00 2662

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2007/107353 A1 (HOCHSCHULE MANNHEIM) 27. September 2007 (2007-09-27)<br>* Zusammenfassung *<br>* Abbildungen 2A,2B,2C,5,11A,14,16A,17E *<br>* Seiten 16-19 *<br>* Seiten 37-40 *<br>* Seiten 44-46 *<br>----- | 1-15 | INV.<br>G01D5/20<br>G01D5/243 |
| A,D | DE 10 2006 012952 A1 (FACHHOCHSCHULE MANNHEIM) 3. Januar 2008 (2008-01-03)<br>* das ganze Dokument *<br>----- | 1-15 | |

RECHERCHIERTE SACHGEBIETE (IPC)
G01D

Der vorliegende Recherchenbericht wurde für alle Patentansprüche erstellt

1

| Recherchenort | Abschlußdatum der Recherche | Prüfer |
|---|---|---|
| München | 14. März 2016 | Barthélemy, Matthieu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 00 2662

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2016

| Im Recherchenbericht angeführtes Patentdokument | Datum der Veröffentlichung | Mitglied(er) der Patentfamilie | Datum der Veröffentlichung |
|---|---|---|---|
| WO 2007107353 A1 | 27-09-2007 | DE 102006012952 A1<br>EP 1996900 A1<br>WO 2007107353 A1 | 03-01-2008<br>03-12-2008<br>27-09-2007 |
| DE 102006012952 A1 | 03-01-2008 | DE 102006012952 A1<br>EP 1996900 A1<br>WO 2007107353 A1 | 03-01-2008<br>03-12-2008<br>27-09-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4007454 A
- DE 102006012952